(19) Europäisches Patentamt
European Patent Office
Office européen des brevets

(11) **EP 4 053 498 B1**

(12) **EUROPÄISCHE PATENTSCHRIFT**

(45) Veröffentlichungstag und Bekanntmachung des Hinweises auf die Patenterteilung:
**17.04.2024   Patentblatt 2024/16**

(21) Anmeldenummer: **22156117.8**

(22) Anmeldetag: **10.02.2022**

(51) Internationale Patentklassifikation (IPC):
**G01B 11/245** (2006.01)     **G06T 7/593** (2017.01)
**G01B 11/24** (2006.01)      **G06T 7/557** (2017.01)
**G01B 11/25** (2006.01)      **G06T 7/73** (2017.01)

(52) Gemeinsame Patentklassifikation (CPC):
**G01B 11/24; G01B 11/2522; G01B 11/2545;
G06T 7/557; G06T 7/73;** G06T 2207/30112

(54) **SCANNER, DAMIT AUSGESTATTETE ERMITTLUNGS-VORRICHTUNG SOWIE VERFAHREN FÜR DEREN BETRIEB**

SCANNER, DETECTION DEVICE EQUIPPED THEREWITH, AND METHOD FOR OPERATING THE SAME

SCANNER, DISPOSITIF DE DÉTECTION ÉQUIPÉ DE CELUI-CI, AINSI QUE SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2021   DE 102021104947**

(43) Veröffentlichungstag der Anmeldung:
**07.09.2022   Patentblatt 2022/36**

(73) Patentinhaber: **Gerhard Schubert GmbH
74564 Crailsheim (DE)**

(72) Erfinder:
• **Greb, Daniel
  Crailsheim (DE)**
• **Haaf, Volker
  Frankenhardt (DE)**

(74) Vertreter: **Weickmann & Weickmann PartmbB
Postfach 860 820
81635 München (DE)**

(56) Entgegenhaltungen:
DE-A1-102013 111 761     DE-U1-202012 013 418
US-A1- 2016 063 691      US-A1- 2017 359 565

• **STOLC SVORAD ET AL: "Depth and all-in-focus imaging by a multi-line-scan light-field camera", JOURNAL OF ELECTRONIC IMAGING, S P I E - INTERNATIONAL SOCIETY FOR OPTICAL ENGINEERING, US, Bd. 23, Nr. 5, 1. September 2014 (2014-09-01), Seite 53020, XP060047706, ISSN: 1017-9909, DOI: 10.1117/1.JEI.23.5.053020 [gefunden am 2014-10-15]**

**Beschreibung**

**I. Anwendungsgebiet**

Die Erfindung betrifft die Positionsbestimmung sowie 3D-Vermessung von Produkten mit optischen Mitteln.

**II. Technischer Hintergrund**

Um Produkte beispielsweise ergreifen und handhaben zu können, etwa in der Verpackungstechnik, muss zunächst deren Position und gegebenenfalls auch - bei in der Aufsicht unrunden Produkten - deren Drehlage ermittelt werden, sowie bei Produkten, die nicht immer die exakt gleiche, vorgegebene Form aufweisen, auch deren dreidimensionale Form.

Ein typischer Anwendungs-Fall ist eine sogenannte Picker-Straße, bei der auf einem sich bewegenden Förderband, dem Produkt-Band, unregelmäßig darauf angeordnete Produkte herantransportiert werden und von - meist mehreren in Laufrichtung des Produktbandes angeordneten - Pickern, in aller Regel Robotern, ergriffen, abgehoben und in neben dem Produkt-Band stillstehende oder auf einem Behälter-Band laufende Behälter umgesetzt werden.

Dort ist vor dem Beginn des Umsetzbereiches der Picker-Straße regelmäßig ein berührungslos arbeitender Scanner im Abstand über dem Produkt-Band angeordnet, der die Position und Drehlage und gegebenenfalls auch Form der darunter durchlaufenden Produkte entlang einer quer über das Produkt-Band verlaufenden Abtast-Linie ermittelt und in Kenntnis der Laufgeschwindigkeit des Produktbandes deren Position weiter rechnet, sodass jeder Picker entlang der Pickerstraße zu jedem Zeitpunkt weiß, an welcher Position innerhalb seines Greifbereiches sich ein Produkt befindet und ggfs. in welcher Drehlage.

Solche Scanner senden elektromagnetische Strahlung aus, die vom Produkt reflektiert wird, wobei die reflektierte Strahlung mittels eines Detektors auf dessen eindimensionaler oder zweidimensionaler Detektor-Fläche detektiert wird.

Selbst wenn die Produkte jeweils für sich betrachtet eine vorgegebene, immer gleichbleibende Form besitzen, kann die Formermittlung der auf dem Produkt-Band liegenden Produkte dennoch sinnvoll sein, um beispielsweise zu erkennen, wenn zwei Einzelprodukte ganz oder teilweise aufeinanderliegen.

Da die Laufgeschwindigkeit des Produkt-Bandes relativ hoch ist und die Anzahl der darauf liegenden Produkte ebenfalls, wird angestrebt, diese Positionsbestimmung mit möglichst geringer Rechenleistung realisieren zu können, insbesondere just-in-time realisieren zu können, sowie den baulichen Aufwand für den Scanner und dessen Montage gering zu halten.

In diesem Zusammenhang sind bisher häufig Ein-Linien-Scanner verwendet worden, die einen Linien-Sensor mit einer, meist nur einzigen, Pixel-Reihe umfassen, die dann in Querrichtung zur Transportrichtung verlaufend angeordnet wird und mittels der Aufnahmen entlang der Abtast-Linie angefertigt wurden.

Dies kann entweder unter verschiedenen Beleuchtungen mit zeitversetzt aufgestrahltem farbigen Licht, oder mit mehreren solcher Pixel-Reihen unter unterschiedlichen Aufnahmewinkeln zur Auflagefläche der Produkte gleichzeitig erfolgen, und aus deren Verrechnung - zum Beispiel mittels des Lichtschnitt-Triangulationsverfahrens - die gewünschte Höhenprofil-Linie in Querrichtung über das Produkt-Band hinweg ermittelt werden.

Der Nachteil besteht

- in einer notwendigen relativ hohen Rechenleistung,
- vor allem aber der Tatsache, dass solche Ein-Linien-Scanner mit nur einer einzigen Pixel-Reihe wegen der geringen Absatzzahlen sehr teuer sind und
- je nach benutztem Auswerte-Verfahren eine sehr exakte mechanische Justierung des Linien-Scanners relativ zur Auflagefläche erfordern.

Wenn - da Produkt-Bänder in unterschiedlichen Breiten eingesetzt werden - mehrere solcher Ein-Linien-Scanner in Querrichtung zum Produkt-Band hintereinander angeordnet und gemeinsam als Scan-Einheit betrieben werden, muss auch die fluchtende Ausrichtung ihrer Pixel-Strecken zueinander sehr exakt erfolgen.

Zusätzlich sind Maßnahmen erforderlich, um - zumindest bei Verwendung nur eines solchen Ein-Linien-Scanners - das Höhen-Profil in Querrichtung ermitteln zu können, sei es das Aufstrahlen von geometrischen Mustern, zumindest das Aufstrahlen einer Laser-Lichtlinie, oder die abwechselnde Beleuchtung mit unterschiedlichen Farben oder Ähnliches.

Ferner ist dabei der Vorbereitungsaufwand nach der Montage des Scanners bis zu dessen Einsatzbereitschaft erheblich durch Kalibrieren und weitere zeitintensive Maßnahmen.

Ferner ist die sogenannte Lichtfeld-Technik bekannt, wie sie heute in der digitalen Fotografie sowie der Erzeugung von Bildern mittels Computern verwendet wird.

Eigentlich versteht man unter dem Lichtfeld eine mathematische Funktion oder Darstellung, welche die Lichtmenge beschreibt, die an jedem Punkt eines dreidimensionalen Raumes in allen Raumrichtungen abstrahlend vorhanden ist.

Da hierbei für jede Raumrichtung auch die Bestrahlungsstärke - neben den Raumkoordinaten X, Y und Z sowie den beiden Raumrichtungen - ermittelt wird, enthält eine solche Funktion auch Informationen über die Schärfentiefe.

Derartige Lichtfeld-Darstellungen oder -Funktionen können erzeugt werden durch mehrere - digitale - Kameras, die die gleiche Szene, die das interessierende Produkt umfasst, aus unterschiedlichen Blickwinkeln aufnehmen, indem aus der Verrechnung der von den einzelnen Kameras erzeugten digitalen Aufnahmen, also den Belichtungswerten der einzelnen Pixel innerhalb deren zweidimensionalen Pixel-Arrays aus lichtempfindlichen Pixeln das sogenannte Lichtfeld berechnet wird.

Deshalb ist es möglich, mit Hilfe solcher Kamera-Arrays, auch plenoptische Kamera genannt, nachträglich - also nach Anfertigen der Aufnahmen - deren Scharfstellung zu verändern und auch unterschiedliche Details auf der Aufnahme, von denen sich eines im Vordergrund und eines weiter entfernt im Hintergrund befinden kann, innerhalb der gleichen Aufnahme scharf zu stellen.

Solche plenoptischen Kameras sind - vor allem für gewerbliche Zwecke - am Markt als Zukaufteile erhältlich, einschließlich der für die vorbeschriebenen Maßnahmen notwendigen Auswerte-Einheiten.

Die DE 20 2012 013 418 U1 **zeigt einen Scanner** zum berührungslosen Bestimmen der Position, ggfs. Drehlage und Form wenigstens eines sich quer zu einer Abtast-Linie des Scanners in Transportrichtung bewegenden Produktes, mit einem Kamerafeld aus zwei Kameras, mit jeweils einem zweidimensionalen optischen Sensoraus lichtempfindlichen Pixeln wobei die Aufnahme-Bereiche benachbarter sich entlang der Abtast-Linie wenigstens überlappen, einer Scanner-Auswerteeinheit, die so ausgebildet ist, dass sie in der Lage ist zum Auswerten der Beleuchtungswerte der Pixel der Kameras, Ermitteln eines Höhen-Profils des Produktes entlang der Abtast-Linie und Zusammensetzen der Höhen-Profile in Bewegungsrichtung des Produktes zu einer dreidimensionalen Darstellung der Form des Produktes, einschließlich dessen Position und ggfs. Drehlage relativ zum Scanner.

Die US 2017/359 565 A1 zeigt eine Bildaufnahmevorrichtung zum Schätzen der Tiefe eines Bildes mit einem sich wiederholenden Muster mit hoher Genauigkeit. Hierbei sind periphere Kameras gemäß Basislinienlängen basierend auf Reziprokwerten unterschiedlicher Primzahlen so angeordnet, dass sie eine Position einer Referenzkamera als Referenz haben, wenn Bilder von unterschiedlichen Standpunkten abgebildet werden. Hierzu wird auf eine Lichtfeldkamera angewendet, die die Referenzkamera und die Vielzahl von peripheren Kameras enthält, ein Parallaxenbild aus den Bildern von mehreren Betrachtungspunkten erzeugt.

Die DE 10 2013 111 761 A1 zeigt ein Verfahren zum berührungslosen Ermitteln der Position und dreidimensionalen Form von Produkten auf einer sich in Längsrichtung erstreckenden Fläche, indem quer über die Fläche mit den Produkten wenigstens zeitweise ein wenigstens abschnittsweise eindeutig codiertes Muster aus optisch abtastbaren Markierungen definiert aufgestrahlt wird, mittels einer Zeilen-Kamera eine Bildzeile, die quer zu den Markierungen im Bereich der Markierungen verläuft, die Ist-Position der Kanten der Markierungen auf der Bildzeile aufgenommen wird, aus der bekannten Soll-Position der Kante in Zeilenrichtung und deren Ist-Position der Versatz der Kante in Zeilenrichtung bestimmt und in einen Höhen-Wert umgerechnet wird, aus den Höhenwerten aller Bild-Zeilen-Punkte ein Bild-Zeilen-Höhenprofil bestimmt wird, die vorstehenden Schritte nach Relativbewegung der Fläche in Längsrichtung einerseits zu den Markierungen sowie andererseits der Bildzeile wiederholt werden, aus vorzugsweise abstandslos aufeinander folgenden Bild-Zeilen-Höhenprofilen das dreidimensionale Höhenprofil der Fläche samt darauf liegenden Produkten erstellt wird.

Anstelle einer Vielzahl von Kameras kann alternativ auch nur eine Kamera mit einem dem flächigen Licht-Sensor, also meist einem Pixel-Array, vorgesetzten Linsen-Array verwendet werden, wobei jede Linse den auftreffenden Lichtstrahl in einen Lichtkegel umformt und damit auf derselben Kamera mehrere Aufnahmen erzeugt werden können.

Für die Zwecke der vorliegenden Anmeldung soll die beschriebene Mehrzahl von Kameras auch die Lösung mit einer Kamera und einem im Strahlengang angeordneten Linsen-Array mit umfassen.

### III. Darstellung der Erfindung

#### a) Technische Aufgabe

Es ist daher die Aufgabe gemäß der Erfindung, einen kostengünstig herstellbaren und mit wenig Aufwand einrichtbaren Scanner zur Positionsbestimmung und gegebenenfalls Formermittlung von Objekten wie etwa zu handhabenden Produkten zur Verfügung zu stellen, sowie eine Ermittlungs-Vorrichtung, die einen solchen Scanner beinhaltet, und ein Verfahren für deren Betrieb.

#### b) Lösung der Aufgabe

Diese Aufgabe wird durch die Merkmale der Ansprüche 1, 8 und 11 gelöst. Vorteilhafte Ausführungsformen ergeben sich aus den Unteransprüchen.

Der Grundgedanke der Erfindung besteht darin, wie in der Lichtfeld-Technik mit einer Vielzahl von Kameras dem sogenannten Kamerafeld, eine Vielzahl von - in diesem Fall insbesondere nur ein-dimensionalen, also als Linien-Scanner - Aufnahmen der gleichen Szene aus unterschiedlichen Richtungen anzufertigen, hiermit jedoch nicht die Tiefenschärfe der daraus erzeugten endgültigen Aufnahme zu beeinflussen, sondern durch in Relation setzen der Einzelaufnahmen zueinander sehr einfach und schnell den Abstand der betrachteten Stelle am Produkt zum Scanner und damit zur Auflagefläche zu ermitteln, bei einem über dem Produkt angeordneten Scanner also die Höhenlage der betrachteten Stelle insbesondere relativ zur Auflagefläche.

Im Folgenden ist verkürzt nur noch von Kameras die Rede, was alle Detektoren für alle Wellenlängen von elektromagnetischer Strahlung - egal ob im Bereich des sichtbaren Lichts oder außerhalb - für die Zwecke der vorliegenden Anmeldung abdecken soll, und ebenso nur noch vom Kamerafeld, was alle Detektorfelder abdecken soll.

Hinsichtlich des Verfahrens zur Bestimmung der Position und ggfs. Drehlage und insbesondere auch der Form eines Produktes auf einer Auflagefläche, die sich insbesondere bewegt wie etwa ein Förderband, ist es bekannt, entlang einer in Querrichtung zur Transportrichtung - der Laufrichtung des Förderbandes - verlaufenden Abtast-Linie das - zweidimensionale - Höhenprofil des auf der Auflagefläche befindlichen Produktes zu ermitteln.

Ferner ist es bekannt, aus den zu unterschiedlichen Zeitpunkten während der Bewegung in Transportrichtung hintereinander aufgenommenen Höhenprofilen, die sich möglichst unmittelbar aneinander anschließen, ein dreidimensionales Höhenprofil des Produktes zu erzeugen. Aus dem dreidimensionalen Höhenprofil ist die in der Aufsicht betrachtete Position des Produktes erkennbar und auch dessen Drehlage um eine Hochachse. Lediglich die Form der Unterseite, mit der das Produkt auf der Auflagefläche aufliegt, kann dadurch nicht ermittelt werden, ist aber für ein anschließendes Ergreifen und Umsetzen wie in einer Verpackungsmaschine, etwa einer Roboterstraße, auch nicht notwendig.

Der Abstand in Transportrichtung der einzelnen zweidimensionalen Höhenprofile sollte so gering wie möglich sein, wobei die Auflösung des dafür benutzten Sensors zu berücksichtigen ist, und ebenso die Größe des Produktes. Vorzugsweise beträgt der Abstand maximal das fünffache, besser maximal das doppelte, der Breite eines Pixels des für die Ermittlung des Höhenprofils verwendeten CCD-Sensors.

Vorzugsweise erstreckt sich dabei die Abtast-Linie über die gesamte Breite der Auflagefläche, um ein Produkt zu erfassen unabhängig davon, wo es in Querrichtung auf der Auflagefläche aufliegt.

Für die Bestimmung des Höhenprofils sind vor allem die markanten Stellen des Produkts entlang der Abtast-Linie von Bedeutung, da solche markanten Stellen wie Spitzen oder Kanten des Produkts auf einem optischen Sensor, insbesondere einem CCD-Sensor, einen Wechsel oder Extremwert der Belichtungsstärke, auf den einzelnen Pixeln bewirken.

Läuft die Abtast-Linie quer über eine Kante des Objekts hinweg, so werden dasjenige oder diejenigen Pixel, die das von der einen an die Kante angrenzenden Fläche reflektierte Licht auffangen, eine z.B. höhere Belichtungsstärke aufweisen als das oder die von der anderen an die Kante angrenzenden Fläche reflektierten Pixel.

Durch den Wechsel der Belichtungsstärke kann die Lage der Kante entlang dieser Abtast-Linie erkannt werden.

Da ein Pixel nur eine einheitliche Belichtungsstärke aufweisen kann, kann entweder die Grenze zwischen dem letzten hoch belichteten Pixel und dem ersten niedrig belichteten Pixel entlang der Abtast-Linie der Position der Kante entsprechen oder - was bei nicht vollständig scharfen Kanten meist der Fall ist - es gibt mindestens ein Pixel, welches eine Belichtungsstärke besitzt, die zwischen den stark beleuchteten Pixeln auf der einen Seite und den schwach belichteten Pixeln auf der anderen Seite der Kante eine mittlere Belichtungsstärke aufweist, da auf diesem mindestens einem Pixel genau die von der Kante reflektierten Lichtstrahlen auftreffen.

In der Regel wird jedes zweidimensionale Höhenprofil mittels genau eines Scans, also einer Aufnahme, eines optischen Sensors wie eines CCD-Sensors ermittelt.

Erfindungsgemäß wird ein und dieselbe markante Stelle entlang der Abtast-Linie auf dem Produkt auf mindestens zwei, meist benachbart zueinander liegenden, optischen Sensoren abgebildet, also auf jedem der Sensoren ein Stellen-Abbild der markanten Stelle vorhanden ist.

Bei Verwendung einer zweidimensionalen Sensor-Fläche verläuft das Abbild der Abtastlinie, also das Abtastlinien-Abbild, nicht unbedingt genau entlang einer Reihe oder Spalte eines solchen matrixförmigen Sensors, aber die davon belichteten Pixel bilden eine Pixel-Strecke auf dem zweidimensionalen flächigen Sensor. Bei den Pixel-Strecken derjenigen Sensoren, auf denen die markante Stelle abgebildet wurde, kann die Position des Stellen-Abbildes innerhalb der Pixel-Strecke erkannt werden aufgrund der Belichtungsstärke oder des Wechsels der Belichtungsstärke, und aus den unterschiedlichen Positionen der Stellen-Abbilder entlang der jeweiligen Pixel-Strecken der Abstand der markanten Stelle auf dem Produkt von den jeweiligen Sensor-Ebenen errechnet werden und damit insbesondere bei einem über einer horizontalen Auflagefläche, auf der das Produkt steht oder liegt, angeordneten Scanner die Höhenlage der markanten Stelle über der Auflagefläche.

Bei geometrisch einfach geformten Produkten wie einem Quader können ausgehend von den markanten Stellen, wie den Kanten oder Ecken eines solchen Quaders, die im Höhenprofil zwischen den einzelnen markanten Stellen liegenden Zwischenbereiche als Geraden unterstellt werden, denn wenn es keine Geraden wären, insbesondere stark gekrümmte Linienabschnitte wären, würden diese wieder als markante Stellen einen relativ starken oder gar schlagartigen Wechsel der Belichtungsstärke entlang der Pixelstrecke auf dem Sensor ergeben.

Meist besitzen die Produkte jedoch keine solche exakte geometrische Form und insbesondere nicht mit exakt ebenen Flächen, sondern es handelt sich häufig um unregelmäßig geformte Produkte, wie etwa Backwaren, deren Oberflächen nicht glatt, sondern zumindest so rau sind, dass die Erhebungen und Vertiefungen, also Spitzen und Rinnen der Oberfläche so groß im Vergleich zur Auflösung des verwendeten optischen Sensors sind, dass sie markante Stellen wie oben beschrieben darstellen.

Somit stehen für die Ermittlung eines Höhenprofils und damit der gesamten Form eines solchen Produktes sehr viele markante Stellen zur Verfügung.

Deshalb kann auf das Aufstrahlen von Mustern auf das Produkt, meist regelmäßigen geometrischen Mustern, bei der Beleuchtung des Produkts in den meisten Fällen verzichtet werden, und nur bei sehr schwierig abzubildenden Produkten, wie etwa einer glatten Kugel oder Halbkugel können diese zusätzlich aufgebracht werden, um die Ermittlung des Höhenprofils zu verbessern und zu vereinfachen.

Ansonsten, also wenn keine Muster aufgestrahlt werden, wird die Szene - also das Produkt und dessen Umgebung - meist über die gesamte Breite der Ablagefläche, in der Regel des Produktbandes, hinweg vorzugsweise diffus beleuchtet.

Auf diese Art und Weise kann mit Hilfe von mehreren aneinander anschließenden flächigen optischen Sensoren eine Linien-Abtastung durchgeführt werden und damit eine Form- und Positions-Ermittlung des Produktes.

Dabei kann erfindungsgemäß die Höhenlage des Punktes, insbesondere der markanten Stelle auf dem Produkt über der Bezugsebene, meist der Auflagefläche, auf einfache Art und Weise dadurch ermittelt werden, dass zunächst die Stellen-Abbilder einschließlich ihrer Positionen innerhalb der Pixel-Strecke, wahlweise auch die gesamten Pixel-Strecken mit den darin eingezeichneten Positionen, virtuell parallel nebeneinander angeordnet werden und anschließend virtuell ein möglichst schmaler Abbild-Kanal quer über alle Pixel-Strecken hinweg so gelegt wird, dass sich die darauf eingezeichneten Positionen, also die Stellen-Abbilder auf den Pixel-Strecken, in diesem Abbild-Kanal liegen, vorzugsweise vollständig darin liegen, und zwar vorzugsweise alle Stellen-Abbilder.

Der Winkel zwischen der Verlaufsrichtung des Abbild-Kanals und der Verlaufsrichtung der Pixel-Strecken wird ermittelt und aus diesem Winkel auf den Abstand der markanten Stelle von der Gesamt-Sensor-Ebene geschlossen, woraus die Höhenlage über der Bezugs-Ebene, also meist der Auflagefläche, errechnet werden kann.

Vorzugsweise wird als Pixel-Strecke innerhalb jedes flächigen optischen Sensors diejenige Abfolge von Pixeln festgelegt, die in Richtung der Abtast-Linie verläuft und vorzugsweise auf der Schnittlinie zwischen der jeweiligen Sensor-Fläche und der Abtast-Ebene, welche die Abtast-Linie beinhaltet, liegen. Als Abtast-Ebene kann eine in einer beliebigen Winkellage, vorzugsweise lotrecht, zur Bezugsebene, etwa der Auflagefläche, definiert werden.

Unter Gesamt-Sensor-Ebene ist dabei diejenige Ebene zu verstehen, in der die Ebenen aller Sensor-Flächen liegen sollten, die eben vorzugsweise zueinander fluchten.

Zwar werden die einzelnen, in der Regel rechteckigen und Ebenen, CCD's am Grundkörper des Scanners bzw. Scanner-Moduls möglichst exakt zueinander ausgerichtet montiert - also möglichst in einer Ebene liegend und mit ihren in Richtung der Abtast-Linie liegenden Kanten möglichst fluchtend zueinander - jedoch können nie vermeidbare Ungenauigkeiten von der Auswerte-Einheit später rechnerisch von der Auswerteeinheit beseitigt werden, insbesondere da sie bei jedem Produkt immer wieder in gleicher Weise auftauchen.

Falls deren Sensor-Ebenen zwar parallel zueinander liegen, aber nicht in einer gemeinsamen Gesamt-Sensor-Ebene, wird aus der Lage der einzelnen parallelen Sensor-Ebenen eine Gesamt-Sensor-Ebene durch Mitteln errechnet, wobei insbesondere unterschiedliche Mittlungs-Verfahren angewandt werden können, beispielsweise indem

- die Mitte zwischen den beiden am weitesten voneinander entfernten Sensor-Ebenen als Gesamt-Sensor-Ebene festgelegt wird oder
- der Mittelwert aus den Abständen der einzelnen Sensor-Ebnen zu der Bezugsebene als der Abstand der Gesamt-Sensor-Ebene zur Bezugsebene festgelegt wird.

Falls die Sensor-Ebenen der einzelnen Sensor-Flächen nicht parallel zueinander liegen, sondern leichte Winkel zueinander aufweisen, wird, gegebenenfalls zusätzlich eine Gesamt-Sensor-Ebenen-Winkellage aus den Winkellagen der einzelnen Sensor-Ebenen ermittelt - vorzugsweise für beide Richtungen der Gesamt-Sensor-Ebene separat -, wiederum vorzugsweise durch Mitteln, also beispielsweise indem

- der Mittelwert zwischen den beiden extremsten Winkellagen als Gesamt-Sensor-Ebenen-Winkellage gewählt oder
- aus der Summe der Abweichungswinkel von einer beliebig definierten Nulllage, etwa der Lage der Bezugsebene, dividiert durch die Anzahl der Sensor-Ebenen die Winkellage der Gesamt-Sensor-Ebene zu der Nulllage ermittelt wird.

Als Abstand dieser Gesamt-Sensor-Ebene zur Bezugs-Ebene kann dann beispielsweise der gemittelte Abstand der Mittelpunkte der einzelnen Sensor-Flächen von der Bezugsebene festgelegt werden.

Falls anstelle einer diffusen Beleuchtung ein sehr schmales Lichtband, also eine Lichtlinie, etwa mittels eines Lasers, auf das, Produkt aufgestrahlt wird, so definiert die auf dem Produkt und der Bezugsebene meist dem Förderband, aufgestrahlte Lichtlinie die Abtast-Linie, zumal diese in der Regel eine Breite besitzt, die im Größenbereich - insbesondere maximal dem doppelten - der Breite eines Pixels des optischen Sensors entspricht.

Ferner kann nicht nur aus der Verlaufsrichtung des Abbildkanals auf die Höhenlage der abgebildeten markanten Stelle geschlossen werden, sondern auch aus der Abbildkanal-Breite auf die Genauigkeit der Messung, denn je geringer die Kanal-Breite ist, umso größer ist die Genauigkeit der Messung.

Falls eines der Stellen-Abbilder bzgl. der Anordnung eines durch die restlichen Stellen-Abbilder liegenden Abbild-Kanals weit abseits liegt, also mindestens um die Hälfte, besser die ganze Kanal-Breite eines solchen nur die übrigen Stellen-Abbilder umfassenden Abbild-Kanals, so kann ein solcher Ausreißer bei der Festlegung des Abbild-Kanals außeracht gelassen werden oder zumindest untergewichtet werden und/oder rechnerisch in nicht Richtung Kanal-Mitte verlagert werden.

Zusätzlich kann das Messergebnis durch Kalibrieren des Scanners mittels eines Kalibrier-Objektes verbessert werden, was jedoch nicht zwingend notwendig ist.

Da im Normalfall keine Lichtlinie auf die Abtast-Ebene und das darauf liegende, abzutastende Produkt aufgestrahlt wird, sondern eine diffuse Beleuchtung vorliegt, und die Detektoren, insbesondere Kameras, jeweils eine 2-dimensionale Detektor-Fläche, insbesondere Pixel-Matrix aus lichtempfindlichen Pixeln, aufweisen, wird in aller Regel bereits zu Beginn des Einsatzes eine Zuordnung durchgeführt, welche Abtast-Linie auf der Abtast-Ebene und über das Produkt hinweg welcher Reihe von Detektor-Elementen auf der Detektor-Fläche, insbesondere welcher Pixel Reihe, also den Pixel-Strecken auf jeder einzelnen z.B. Pixel-Matrix jedes Detektors, insbesondere Kamera, entspricht.

Dies kann ebenfalls bei einem Kalibrierlauf zum Beispiel mittels eines Kalibrier-Körpers - wie er an anderer Stelle ausführlich beschrieben ist - durchgeführt werden.

Hinsichtlich eines Scanners, insbesondere zur Durchführung des beschriebenen Verfahrens, ist es bekannt, dass ein solcher Scanner ein Kamera-Feld aus mehreren Kameras für elektromagnetische Strahlung, - im Folgenden ist zur Vereinfachung lediglich noch von Kameras die Rede, ohne die Erfindung hierauf zu beschränken - die jeweils einen zweidimensionalen, optischen, Sensor aufweisen, zu verwenden, insbesondere eine zweidimensionale Pixel-Matrix aus lichtempfindlichen Pixeln wie bei einem CCD-Sensor, wobei die Aufnahmebereiche benachbarter Kameras in Richtung der abtasten-Linie aufeinanderfolgend und sich entlang einer Abtast-Linie wenigstens einander überlappen.

Die Wellenlänge der elektromagnetischen Strahlung, auf die der optische Sensor anspricht, kann eine Wellenlänge im Bereich des sichtbaren Lichts oder eine nicht sichtbare Wellenlänge, wie etwa Radar-Strahlung, sein

Im Extremfall können die Aufnahme-Bereiche der Kameras, insbesondere auch aller Kameras, sogar die gleiche Strecke auf der Abtast-Linie abdecken.

Dabei ist auch eine Scanner-Auswerteeinheit, in der Regel in Form eines Computers, bekannt, die in der Lage ist, die Belichtungswerte der Pixel der Kameras auszulesen und auszuwerten und daraus ein Höhenprofil des auf der Abtast-Linie liegenden Produktes entlang dieser Abtast-Linie zu ermitteln. Durch anschließendes Zusammensetzen dieser zweidimensionalen Höhenprofile quer zur Verlaufsrichtung der Höhenprofile, insbesondere in Bewegungsrichtung des Produktes, zu einem dreidimensionalen Höhenprofil kann damit einer Darstellung der Form des Produktes - bis auf die Gestaltung von dessen Unterseite - einschließlich dessen Position und ggfs. Drehlage um eine Hochachse relativ zum Scanner, ermittelt werden und damit die Form des Produktes bis auf dessen Unterseite.

ErFindungsgemäß umfasst das Kamerafeld mehr als zwei, insbesondere mehr als drei solcher Kameras, wobei nicht nur die Aufnahme-Bereiche, sondern auch die optischen Sensoren der Kameras in Richtung der Abtast-Linie hintereinander angeordnet sind.

Dadurch ergibt sich ein streifenförmiger Gesamt-Aufnahme-Bereich des Scanners und auch ein streifenförmiger Gesamt-Sensor-Bereich - wobei sich die Sensorflächen der Kameras keineswegs lückenlos aneinander anschließen müssen, sondern Abstände dazwischen vorliegen können - innerhalb dessen jedoch eine Abtast-Linie abgebildet werden kann, wenn auch nicht auf einer einzigen geraden Reihe von hintereinander angeordneten Pixeln, wie bei einem Einlinien-Sensor.

Die zweidimensionalen flächigen, in aller Regel ebenen, insbesondere optischen Sensoren des Scanners sollten vorzugsweise etwa in der gleichen sogenannten Gesamt-Sensor-Ebene angeordnet sein, zumindest vorzugsweise parallel zueinander angeordnet sein, vorzugsweise alle Sensor-Ebenen des Scanners.

Etwa parallel zueinander bedeutet, dass die Abweichungen von der Parallelität zwischen den zwei am meisten voreinander abweichenden Winkellagen der Sensorflächen nicht größer als 10°, besser nicht größer als 5° ist, besser nicht größer als 2° ist, besser nicht größer als 1° ist.

Etwa in der gleichen Ebene angeordnet sein, soll bedeuten, dass die Abweichung zwischen den zwei am meisten voreinander beabstandeten Sensor-Ebenen geringer als 10 mm ist, besser geringer als 5 mm ist, besser geringer als 2 mm ist.

Vorzugsweise sollten die flächigen optischen Sensoren auch von einer Bezugsebene - die nahe an den Sensor-Ebenen und somit noch innerhalb des Gehäuses des Scanners liegen kann, bevorzugt aber davon entfernt ist und insbesondere die Auflagefläche für das abzutastende Produkt ist - alle etwa gleich weit beabstandet sein, was bedeutet, dass die Abweichung des geringsten zum größten Abstand geringer als 10 mm ist, besser geringer als 5 mm ist, besser geringer als 2 mm, ist, bezogen auf den kleinsten Abstand.

Um fast beliebig lange Abtast-Linien, also bezogen auf eine Roboterstraße mit einem Produkt-Band fast beliebig breite Produkt-Bänder, abtasten zu können, sind vorzugsweise die mehreren Kameras des Scanners mit ihren flächigen, insbesondere optischen Sensoren zueinander in einer gemeinsam handhabbaren Baueinheit als Kamera-Modul angeordnet, also an dem Grundkörper eines solchen Kamera-Moduls in fixer räumlicher Anordnung angeordnet sind.

Vorzugsweise ist auch die diese Kameras hinsichtlich ihrer Signale auswertende Modul-Auswerteeinheit Bestandteil des Kamera-Moduls und insbesondere an dessen Grundkörper befestigt.

Vorzugsweise ist jede Kamera signaltechnisch mit der Modul-Auswerteinheit verbunden, jedoch bestehen in aller Regel keine signaltechnischen Verbindungen direkt zwischen den Kameras.

Dadurch ist es möglich, mehrere solcher einfach zu handhabenden Kamera-Module in Richtung der Abtast-Linie hintereinander zu einem Scanner zusammenzufassen, wobei lediglich die Aufnahme-Bereiche der einzelnen Kamera-Module in Richtung der Abtast-Linie aneinander anschließenden Kamera-Module zumindest einander überlappen sollten was durch entsprechende Anordnung der einzelnen Kamera-Module zueinander sichergestellt werden kann.

Der so zusammengestellte Scanner besitzt eine gegenüber den Modul-Auswerteeinheiten übergeordnete Scanner-Auswerteeinheit, die signaltechnisch mit allen Modul-Auswerteeinheiten in Verbindung steht und die Auswerte-Ergebnisse von den Modul-Auswerteeinheiten erhält oder von den Modul-Auswerteeinheiten auch lediglich die Signale der einzelnen Kameras in den einzelnen Kamera-Modulen durchgeschleift erhält.

Zwischen den Modul-Auswerteeinheiten bestehen jedoch in der Regel keine direkten signaltechnischen Verbindungen.

Für die Anordnung der Kamera-Module zueinander als auch zu einer Bezugs-Ebene, meist der Auflagefläche, gilt das zu den einzelnen Kameras innerhalb eines Kamera-Moduls ausgeführte analog für die Kamera-Module zueinander:
Die die Modul-Sensor-Ebenen der Kamera-Module sollten von der Bezuge-Ebene alle etwa gleich weit beabstandet sein.

Dies bedeutet, dass die Abweichung des geringsten zum größten Abstand geringer als 10 mm ist, besser geringer als 5 mm ist, besser geringer als 2 mm, ist, bezogen auf den kleinsten Abstand.

Die die Modul-Sensor-Ebenen der Kamera-Module sollten auch etwa in der gleichen Ebene angeordnet sein. Dies soll bedeuten, dass die Abweichung zwischen den zwei am meisten voreinander beabstandeten Modul-Sensor-Ebenen geringer als 10 mm ist, besser geringer als 5 mm ist, besser geringer als 2 mm ist.

Die Kamera-Module sollten mit ihren Modul-Sensor-Ebenen, also den Gesamt-Sensor-Ebenen dieses Kamera-Moduls, etwa parallel zur Bezugs-Ebene und/oder parallel zueinander angeordnet sein.

Etwa parallel bedeutet, dass die Abweichungen von der Parallelität zwischen den zwei am meisten voreinander abweichenden Winkellagen der Modul-Sensor-Ebenen nicht größer als 10°, besser nicht größer als 5° ist, besser nicht größer als 2° ist, besser nicht größer als 1° ist.

Ferner sollten die Modul-Sensor-Ebenen etwa in der gleichen Ebene liegen, was bedeutet, dass die Abweichungen von der Parallelität zwischen den zwei am meisten voreinander abweichenden Winkellagen der Modul-Sensor-Ebenen nicht größer als 10°, besser nicht größer als 5° ist, besser nicht größer als 2° ist, besser nicht größer als 1 ° ist.

Vorstehendes gilt vorzugsweise für alle Kamera-Module eines Scanners.

Hinsichtlich einer Ermittlungs-Vorrichtung zum Bestimmen der Position, insbesondere der Drehlage um eine Hochachse und/oder der Form eines sich bewegenden Produktes, welches eine sich in Transportrichtung bewegende Auflagefläche, insbesondere ein Förderband, umfasst, auf dem das wenigstens eine Produkt aufliegt und bei mehreren Produkten diese vorzugsweise unregelmäßig darauf verteilt sind, ist der Scanner, der sich in Querrichtung zur Transportrichtung über die, vorzugsweise gesamte, Breite der Auflagefläche erstreckt, wie zuvor beschrieben.

Ferner sollte eine Lichtquelle vorhanden sein, die die Szene mit dem Produkt darin, vorzugsweise von oben betrachtet, diffus beleuchtet, wobei diese Lichtquelle auch Bestandteil des Scanners sein kann und an dessen Grundkörper befestigt sein kann und von dessen Steuerung oder Auswerteeinheit gesteuert werden kann, insbesondere hinsichtlich der Beleuchtungsstärke.

Dadurch kann die passende Lichtmenge aufgestrahlt werden, um abhängig von den Reflektions-Eigenschaften der Oberfläche des Produktes und / oder der Auflagefläche eine solche Belichtungsstärke auf den Pixeln des optischen Sensors zu erzielen, die eine gute Auswertung und vor allem Ermittlung der Abbilder der markanten Stellen ermöglicht.

Vorzugsweise sollte die Lichtquelle zusätzlich oder stattdessen in der Lage sein, ein Muster, insbesondere ein regelmäßiges geometrisches Muster, auf die Szene aufzustrahlen, also vorzugsweise über die gesamte Breite des Auflagebandes hinweg, was bei schwierig abzutastenden Objekten, wie beispielsweise einer glatten, stark reflektierenden oder sehr matten, Kugel oder Halbkugel notwendig werden kann.

Anstelle einer diffus beleuchtenden Lichtquelle kann die Lichtquelle auch derart gestaltet sein, insbesondere als Laser, dass sie einen Lichtfächer abgibt, der ein sehr schmales Lichtband, eine sogenannte Lichtlinie, quer über das Produkt-Band und auch ein darauf liegendes Produkt aufstrahlt, sodass die Lichtlinie gleichzeitig die Abtast-Linie des Scanners definiert.

Die Ermittlungs-Vorrichtung kann auch ein Kalibrier-Objekt umfassen, mittels dessen - vor allem nach der Erstmontage des Scanners - Absolut-Positionen von bestimmten Punkten und Absolut-Strecken kalibriert werden können.

Zu diesem Zweck muss es möglich sein, das Kalibrier-Objekt in einer definierten Position zur Bezugs-Ebene, insbesondere zur Auflagefläche, zu positionieren.

Das Kalibrier-Objekt ist vorzugsweise mit einem definierten geometrischen Muster, beispielsweise einem schwarz-weißen Schachbrett-Muster, bedruckt, bei dem die Kantenlänge der einzelnen Quadrate als auch des gesamten Schachbretts bekannt ist, sodass die vom Scanner ermittelten Größen und Absolut-Positionen von Punkten auf dem Kalibrier-Objekt und damit auf der Bezugs-Ebene kalibriert werden können.

Im Übrigen ist es selbst ohne Kenntnis der Lage der Kameras zueinander mittels bekannter Methoden wie der Epipolar-Geometrie möglich, bei einer Abtastung eines Produktes daraus zusätzlich Informationen über die relative Position der Kameras zueinander abzuleiten, sofern man die Parameter der einzelnen Detektoren, insbesondere Kameras, kennt, was in der Regel der Fall ist.

**c) Ausführungsbeispiele**

Ausführungsformen gemäß der Erfindung sind im Folgenden beispielhaft näher beschrieben. Es zeigen:

| | |
|---|---|
| **Figur 1a:** | eine Roboter-Straße in der Aufsicht, |
| **Figur 1b:** | die von deren Scanner abgetastete Höhenprofil-Linie, |
| **Figur 2a:** | den Scanner in der Aufsicht von oben, |
| **Figur 2b:** | die Betrachtungs-Situation des Scanners, |
| **Figur 3a:** | die Zuordnung der einzelnen Pixel-Strecken, |
| **Figur 3b:** | die trigonometrischen Funktionen, |
| **Figur 3c:** | der genutzte Arbeitsbereich innerhalb der Tangens-Funktion, |
| **Figur 4a:** | einen nicht ideal montierten Scanner in der Aufsicht von oben, |
| **Figur 4b:** | eine Pixel-Strecke innerhalb eines schräg montierten zweidimensionalen optischen Sensors. |
| **Figur 5:** | eine Seitenansicht auf einen Scanner mit zueinander parallelen Sensor-Flächen, |
| **Figur 6a:** | eine Seitenansicht auf einen Scanner mit zueinander winklig angeordneten Sensor-Flächen, |
| **Figur 6b:** | eine Seitenansicht auf einen Scanner mit zueinander winklig angeordneten Sensor-Flächen und eingezeichneten Mittelpunkten. |

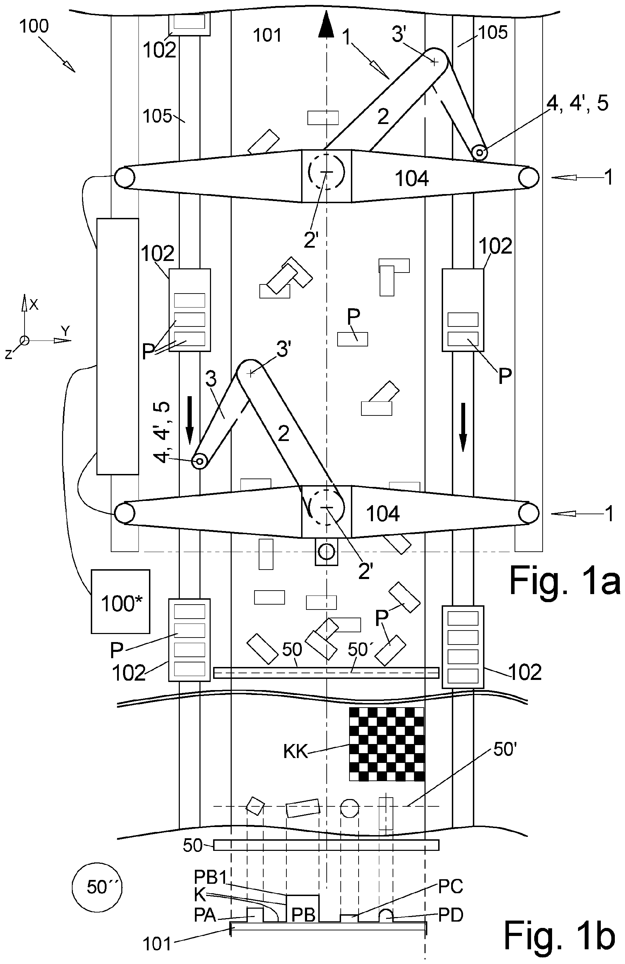

**Figur 1a** zeigt in der Aufsicht eine bekannte Verpackungsmaschine in Form einer Roboterstraße 100 als Umsetz-Vorrichtung, mittels der Produkte P, hier nur eine Sorte von Produkten P, die ungeordnet auf einer Aufnahmefläche 101 - hier in Form eines laufenden Produkt-Bandes 101 - angeliefert werden und von einem der mehreren in dieser Durchlaufrichtung X hintereinander angeordneten Roboter 1 ergriffen und auf einer Ablagefläche 103 - in diesem Fall der Boden von bereitgestellten Behältern 102 - abgelegt werden.

Zu diesem Zweck wird am Eingang vor dem Umsetz-Bereich, also vor dem ersten in Durchlaufrichtung 101' vorhanden Roboter 1, mittels eines Scanners 50 die Position und gegebenenfalls - bei in der Aufsicht unrunden Produkten - auch Drehlage der Produkte P auf dem Produktband 101 ermittelt und an die Steuerung 100* der Roboterstraße 100 weitergegeben, die auch mit den Antrieben aller anderen beweglichen Komponenten verbunden ist und beispielsweise die Geschwindigkeit des Produktbandes 101 in Transportrichtung X kennt, so dass jederzeit die absoluten Produkt-Positionen der Produkte P auf dem Produktband 101 bekannt sind gegebenenfalls einschließlich ihrer Drehlage.

Die Behälter 102 stehen auf einem von in diesem Fall zwei Behälter-Bändern 106, welche in diesem Fall entgegen der Transportrichtung X jeweils seitlich neben dem Produktband 101 laufen.

Von den Robotern 1 sind jeweils die oberhalb des Produktbandes 101 in der horizontalen Querrichtung zur Transportrichtung X verlaufenden, meist aufgeständerten, Quertraversen 104 erkennbar, die als Roboter-Basis 104 dienen und an denen jeweils ein - in diesem Fall, aber nicht zwingend, serieller - Roboterarm befestigt ist.

Dessen Oberarm 2 ist gegenüber der Roboterbasis 104 um eine sich in der Vertikalen Z erstreckende Oberarm-Achse 2' in der horizontalen Ebene verschwenkbar, und ebenso ein Unterarm 3, der schwenkbar um eine aufrechte, insbesondere vertikale, Unterarm-Achse 3' am freien Ende des Oberarmes 2 befestigt ist.

Am freien Ende des Unterarmes 3 ist eine Hub-Einheit 4 angebracht, die die Vertikalbewegung eines an ihr befestigten Greifkopfes bewirkt, der mindestens einen Greifer 5, insbesondere Saugers 5, aufweist.

In **Figur 1a** ist - in Transportrichtung X etwa in der Mitte des Scanners 50 - die ebenfalls quer über das gesamte Produkt-Band 101 mit den immer gleichen Produkten P verlaufende Abtast-Linie 50' eingezeichnet.

Im untersten Teil der **Figur 1a** ist stattdessen eine Situation mit unterschiedlichen auf dem Produkt-Band 101 nebeneinanderliegenden Produkten dargestellt, sowie einer sich quer über all diese Produkte erstreckenden, zugehörigen Abtast-Linie 50'.

Ferner ist dort ein Kalibrier-Körper KK in definierter Position - hier mit seiner rechten Kante fluchtend und deckungsgleich zur rechten Kante des Produkt-Bandes 101 - dargestellt, der auf seiner Oberseite ein definiertes Muster, hier ein Schachbrett-Muster, trägt, dessen Abmessungen genau bekannt sind, also sowohl der einzelnen Quadrate als auch der gesamten Schachbrett-Fläche. Auch die Höhe dieses Kalibrier-Körpers KK, also quer zur Auflagefläche, der Oberfläche des Produkt-Bandes 101.

Durch meist nur einmaliges Abtasten eines solchen Kalibrierung-Körpers KK, nach der Montage oder neuen Justage des Scanners 50, können die Messergebnisse des Scanners 50 auf die konkreten, absoluten Abmessungen eines abzutastenden Produktes in den 3 Raumrichtungen kalibriert werden.

Darunter ist in **Figur 1b** für diese Situation - mit Blickrichtung in Transportrichtung X des Produktbandes 101 - in der Abtast-Ebene 50" die zweidimensionale Höhen-Konturlinie K dargestellt, die mittels des Scanners 50 bestimmt wird und sich ergibt aus der Höhen-Kontur eines Produktes an dieser Stelle, derX-Position in Transportrichtung X sowie den zwischen den Produkten befindlichen Abschnitten des Produktbandes 101.

Zu Erläuterungszwecken sind hier unterschiedlich gestaltete Produkte PA bis PD dargestellt wobei es sich bei PA um einen exakten Würfel, bei PB um einen Quader, bei PC um einen mit der Stirnfläche auf dem Produkt-Band 101 stehenden Zylinder und bei PD um einen mit seiner Mantellinie auf dem Produkt-Band 101 liegenden Zylinder handelt, was in realen Aufgabenstellungen eher selten vorkommt.

Die zumindest teilweise auf dem Produkt-Band 101 verlaufende Abtast-Linie 50' ist lediglich in der Aufsicht von oben betrachtet eine Linie, dreidimensional dagegen eine auf der Oberfläche des Produkt-Bandes 101 stehende, insbesondere lotrecht stehende, Abtast-Ebene 50", die in Querrichtung Y zur Transportrichtung X verläuft und in der sowohl die Abtast-Linie 50' als auch die zweidimensionale Höhen-Konturlinie K als auch die Gesamt-Sensor-Linie 52' des Scanners 50 liegen.

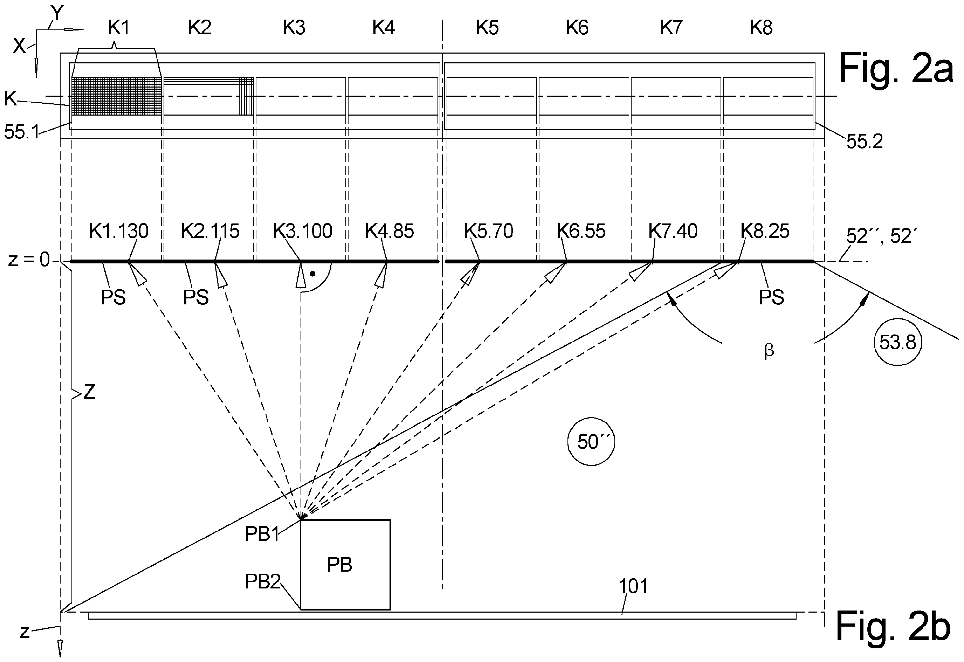

**Figur 2a** zeigt in der Aufsicht von oben, dass der Scanner 50 aus in Querrichtung Y zur Transportrichtung X zwei aufeinanderfolgenden Kamera-Modulen 55.1, 55.2 besteht, die sich in Querrichtung Y aneinander anschließen, mit einer möglichst kleinen Lücke dazwischen.

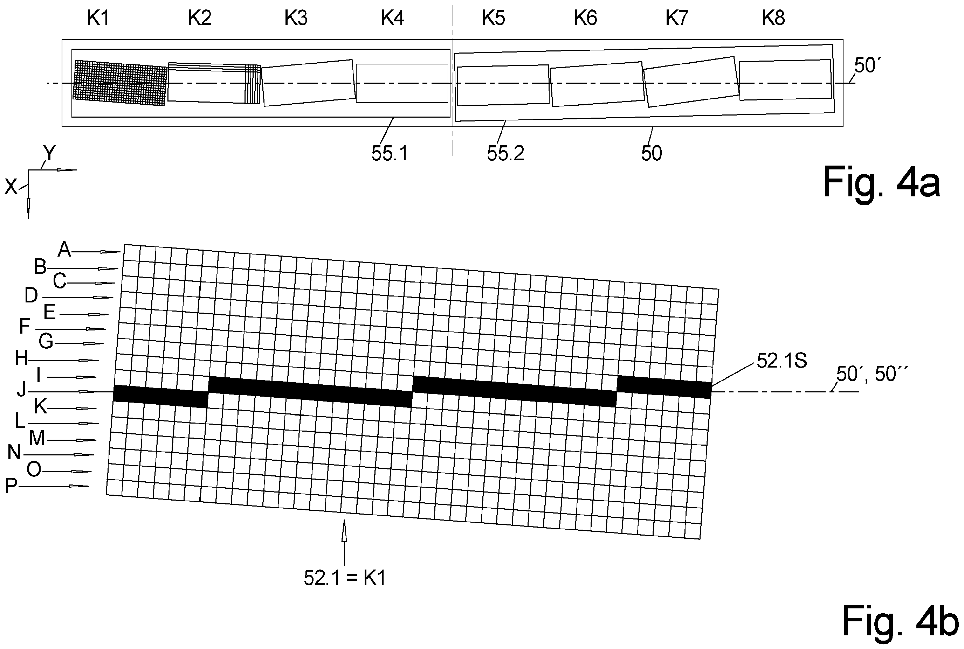

Jedes der Kamera-Module 55.1, 55.2 beinhaltet selbst wiederum mehrere, in diesem Fall vier, in der Praxis eher mehr, einzelne digitale Kameras 51.1- 51.4 bzw. 51.5- 51.8, kurz K1 bis K8 genannt, von denen jede einen flächigen, also zweidimensionalen, optischen Sensor 52.1- 52.8 mit einer Pixel-Matrix 54 aus lichtempfindlichen Pixeln 54A1, 54A2 usw. und 54B1, 54 B2, etwa einen CCD-Sensor, aufweist, innerhalb dessen die lichtempfindlichen Pixel in Zeilen A, B und Spalten ... 1, ...2 angeordnet sind, wie am besten in **Figur 4b** zu erkennen.

Für die Zwecke der vorliegenden Erfindung sind die flächigen Sensoren 52.1-52.8 nicht quadratisch, sondern rechteckig, und die Richtung der Zeilen A, B ist die größere Erstreckungsrichtung des zweidimensionalen Sensors.

Wie ersichtlich schließen sich auch die einzelnen Sensoren 52.1- 52.8 - die mit ihrer größten Erstreckungsrichtung, also entlang den Pixel-Zeilen A, B. In Richtung der Abtast-Linie 50' ausgerichtet sind - in Richtung der Abtast-Linie 50' mit möglichst geringem Abstand hintereinander an.

**Figur 2b** zeigt - betrachtet in Transportrichtung X - beispielhaft anhand nur des einen Produktes PB und der abzutastenden markanten Stelle PB1 in Form einer Kreuzung der etwa in Transportrichtung X verlaufenden oberen Kante des Produktes PB mit der Abtast-Linie 50' oder Abtast-Ebene 50" die Positionierung dieser Stelle PB1 zu den entlang dieser Abtast-Linie 50' verlaufenden Pixel-Strecken PS in den einzelnen Sensoren der Kameras K1 bis K8.

In dieser Blickrichtung ist auch zu sehen, dass die einzelnen Kameras K1 bis K8 einen Aufnahmebereich 53.1 - 53.8 mit einem entsprechenden Öffnungswinkel β von der Pixel-Strecke PS aus aufweisen, sodass jede einzelne Kamera K1 bis K8 die gesamte Breite des Produktbandes 101 "sehen" kann, auch die äußersten der beiden Kameras K1 und K8. Nur dadurch ist sichergestellt, dass jede interessierende Stelle, sofern sie nur innerhalb der Breite des Produktbandes 101 liegt, von jeder der Kameras K1 bis K8 erfasst wird.

Zumindest jedoch müssen die Aufnahmebereiche der einzelnen Kameras des Scanners - auch wenn sie auf mehrere Kamera-Module verteilt sind - in Richtung der Abtast-Linie einander überlappen.

Sofern die Kameras - wie in **Figur 2a** in der Aufsicht dargestellt - mit ihrer ZeilenRichtung exakt in Richtung der Abtast-Linie 50' liegen, wird nur eine Pixel-Zeile, z.B. Zeile N, jedes zweidimensionalen Sensors, nämlich diejenige, die genau auf der Abtast-Linie 50' liegt, benutzt.

Gemäß **Figur 2b** trifft das von der relevanten Stelle PB1 reflektierte Licht auf dieser Pixel-Zeile N an einer jeweils unterschiedlichen Zeilenposition, also unterschiedlicher Spalte, in Querrichtung Y auf.

Beim dargestellten Beispiel einer Zeilen-Länge von 200 Pixeln ist die in der linken Hälfte der Breite des Transportbandes 101 liegende Stelle PB1 bei der ersten Kamera K1 beispielsweise auf die Pixel-Position oder Spalte 130 von 200 auf, bei der letzten Kamera K8 bei der Pixel-Position 25.

Da sich die interessierende Stelle PB1 bei der Kamera K3 ziemlich genau unter der Mitte von deren Pixel-Zeile befindet, trifft es dort auf die mittlere Pixel-Position z.B. 100 auf.

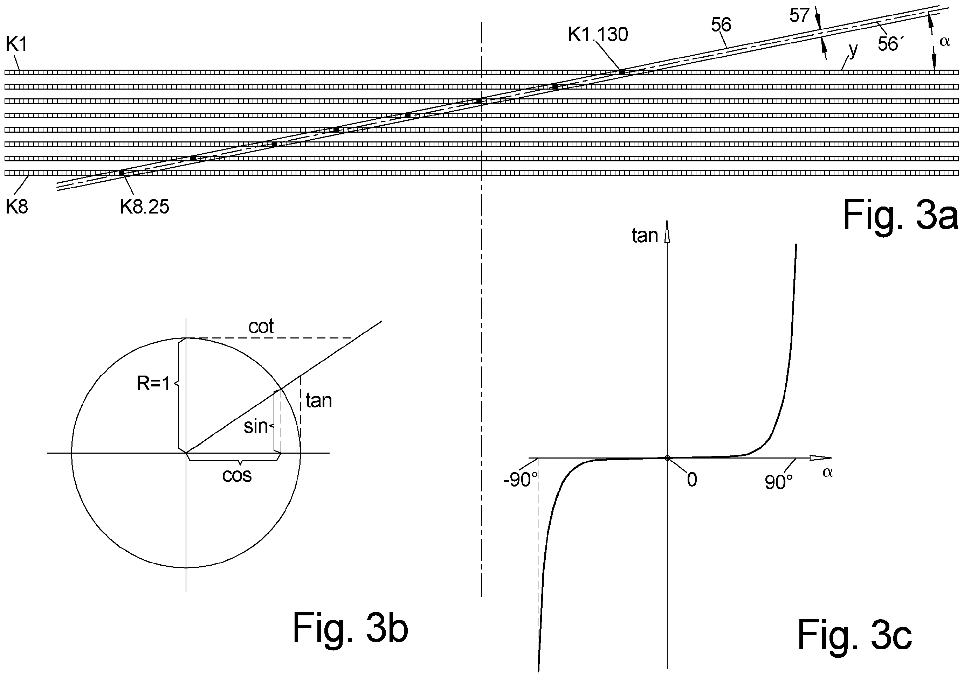

Die entsprechende benutzte Pixel-Zeile jeder der Kameras K1 bis K8 ist in **Figur 3** mit dem jeweils darin belichteten Pixel - dem Abbild der Stelle PB1 auf dem Lichtsensor - dargestellt, wobei das jeweils belichtete Pixel schwarzgefüllt dargestellt ist, und die einzelnen Pixel-Zeilen sind direkt untereinander (aus Übersichtlichkeitsgründen mit geringem Abstand, in der Praxis möglicherweise auch ohne Abstand unmittelbar aneinander angrenzend) dargestellt.

Dabei ist ersichtlich, dass sich schräg über alle virtuell so angeordneten Pixel-Zeilen hinweg ein Abbild-Kanal 56 einzeichnen lässt, in dem sich alle *beleuchteten* Pixel befinden.

Aus **Figur 2b** wird klar, dass die beleuchteten Pixel nur dann bei den Pixel-Zeilen aller Kameras K1 bis K8 an der gleichen Querposition liegen würden, wenn die Stelle PB1 unendlich weit von der Sensor-Ebene 52", also der aus allen benutzten Pixel-Zeilen durchgehenden Sensorlinie 52', entfernt wären, denn nur dann wären die von der Stelle PB1 zu den einzelnen Pixel-Zeilen reflektierten Lichtstrahlen annähernd parallel.

Der eingezeichnete Schrägstellungswinkel α zwischen der Kanal-Richtung 56' des Kanals 56 und der Querrichtung Y, insbesondere der Sensorlinie 52' wäre also 90°, wenn der Punkt PB1 unendlich weit von der Sensor-Ebene 52" entfernt wäre.

Umgekehrt würde ein sich ergebender Winkel α = 0° (theoretisch) bedeuten, dass die beiden in Querrichtung Y am weitesten voneinander entfernten belichteten Pixel, also auf dem ersten und letzten Sensor, unendlich weit auseinanderliegen würden, was nur bei maximal an die Sensor-Ebene 52" angenäherter Stelle PB1, also von dort Z-Abstand z = 0 vorstellbar ist.

In der Praxis ist dies nicht möglich wegen der begrenzten Breite der Abbildungs-Bereiche 53.1 - 53.8 jeder der Kameras K1 bis K8. Deshalb kann in der Praxis der Winkel α kleiner sein als ein durch die Anordnung und Abbildungs-Bereiche der Kameras bestimmter Minimalwert.

Da α = 0° einem Abstand von der Sensorebene 52" in der Höhe von z = 0 entspräche und andererseits α = 90° einem unendlich großen Z-Abstand z = entspricht, bedeutet dies in der Winkel-Geometrie gemäß der trigonometrischen Funktionen, wie in **Figur 3b** dargestellt, dass der Abstand in Z-Richtung dem Tangens des Winkels α entspricht also

$$z = \tan \alpha$$

Da die Breite der Pixel-Zeilen bzw. der virtuell angenommene Abstand zwischen den Pixel-Zeilen gemäß **Figur 3a** gering ist, bewegt man sich in einem Winkelbereich von α meist deutlich unter 45°, also einem Winkelbereich, in dem die Tangens-Kurve gemäß **Figur 3c** noch annähernd linear verläuft.

**Figur 3a** lässt ferner erkennen, dass die minimal erreichbare Kanalbreite 57 des um die belichteten Pixel herum virtuell zu legenden Kanals 56 umso geringer ist, je exakter diese belichteten Pixel auf einer Linie, insbesondere der Mittelinie 56' des Kanals 56, liegen.

Solche Abweichungen von der Lage auf einer Linie - wie in **Figur 3a** bei den Kameras K1 und K6 ersichtlich - können bewirkt werden durch

- den Abstand einer einzelnen Sensor-Ebene z.B. 52.3" von der Gesamt-Sensor-Ebene 52" in Z-Richtung
- der nicht parallelen Lage einer einzelnen Sensor-Ebene 52.3" zu der Gesamt-Sensor-Ebene 52", vor allem verkippt um eine in X-Richtung liegende Kippachse.

Somit gibt die Kanalbreite 57 wieder, wie hoch der Fehler der berechneten Höhenlage z der Stelle PB1 ist, was für statistische Fehlerberechnungen benutzt werden kann.

Zusätzlich können einzelne beleuchtete Pixel, die bei Nichtberücksichtigung eine drastisch geringere Kanalbreite 57 bewirken würden, sogenannte Ausreißer, vollständig unberücksichtigt bleiben oder rein rechnerisch in Richtung Kanalmitte 56' verlagert werden, auch für zukünftige Messungen.

**Figur 4a** zeigt in einer Aufsicht von oben analog zu **Figur 2a** eine Anordnung, bei der die zweidimensionalen Sensor-Flächen 52.1 - 52.8 mit ihren Sensor-Ebenen 52.1" - 52.8" in der Aufsicht betrachtet nicht fluchtend zueinander ausgerichtet sind, sondern die Verlaufsrichtung ihrer Pixel-Zeilen A, B, C - die mittlere davon wird als Sensor-Linie 52.1' - 52.8' bezeichnet - von der Richtung der Gesamt-Sensor-Linie 52' abweichen.

Dieser Fall - der zur Vereinfachung der Montage des Scanners 50 beherrschbar sein sollte - bei dem dann die Pixel-Strecke 52.1S oder 52.2S, entlang der eines der Pixel belichtet werden wird, nicht mit einer der Pixel-Zeilen A, B, C übereinstimmt, sondern eine schräg über mehrere Zeilen hinweg verlaufende Pixel-Strecke 52.1S oder 52.2S ist, ist in **Figur 4b** dargestellt.

Analog können auch die beiden Kamera-Module 55.1, 55.2, die in diesem Fall den Scanner 50 bilden, in der Aufsicht betrachtet nicht exakt zueinander fluchten, sondern leicht winkelig zueinander angeordnet sein.

Solche mangelnden Fluchtungen - sowohl innerhalb eines Scanner-Moduls als auch zwischen verschiedenen Scanner-Modulen können jedoch rechnerisch ausgeglichen werden:

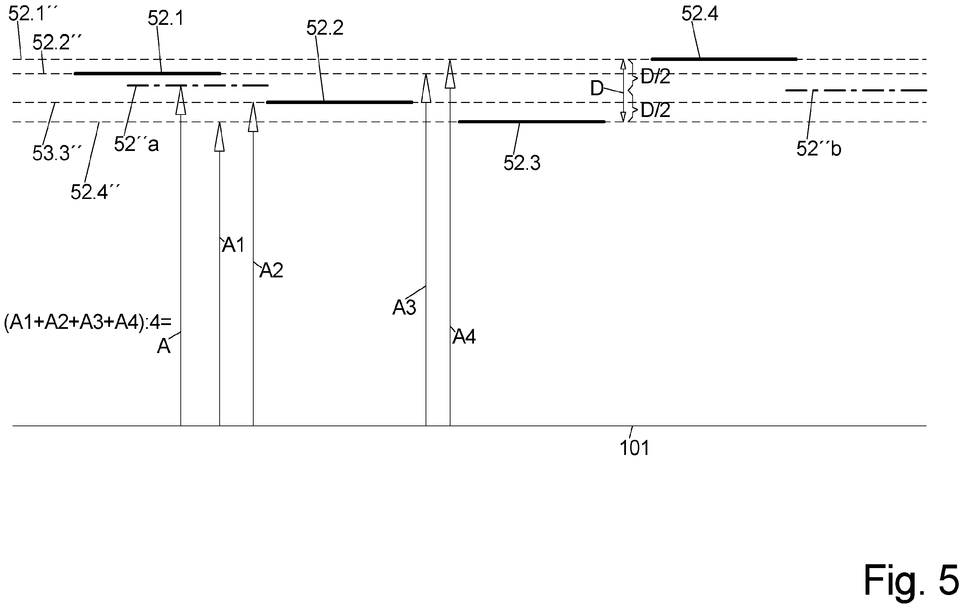

**Figur 5** zeigt in einer Seitenansicht für einen Scanner mit 4 Sensorflächen 52.1-52.4, die parallel zueinander liegen aber nicht in einer Ebene, wie daraus eine Gesamt-Sensor-Ebene 52" ermittelt werden kann:

In der linken Hälfte ist dargestellt, dass zunächst die Abstände A1 bis A4 der einzelnen Sensor-Flächen zu einer Bezugsebene 101, die vorzugsweise parallel zu den Sensor-Ebenen 52.1"-52.4" der Sensor-Flächen 52.1-52.4 verläuft, gemessen und durch einfache Mittelwertbildung gemäß A1+A2+A3+A4 geteilt durch Anzahl der Einzel-Abstände ein mittlerer Abstand A ermittelt wird, den die Gesamt-Sensor-Ebene 52"a nach dieser Methode a) besitzen soll.

Im rechten Teil des Bildes ist dargestellt, dass die nach dieser Methode b) festgelegte Gesamt-Sensor-Ebene 52"b genau in der Mitte zwischen den beiden Sensor-Ebenen 52.1" und 52.3" liegt, die am weitesten voneinander entfernt sind, nämlich um die Distanz D.

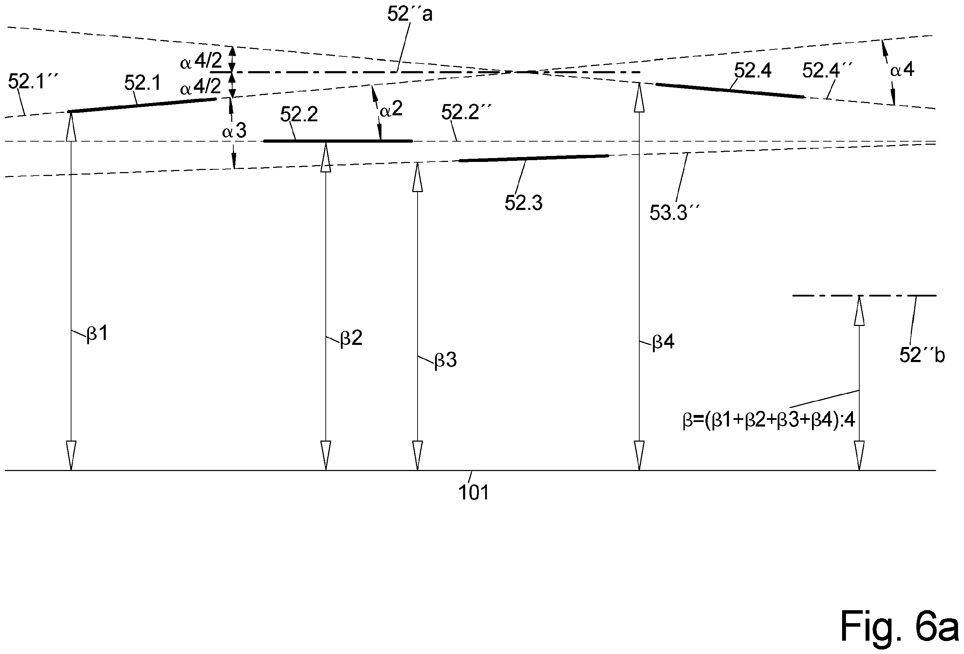

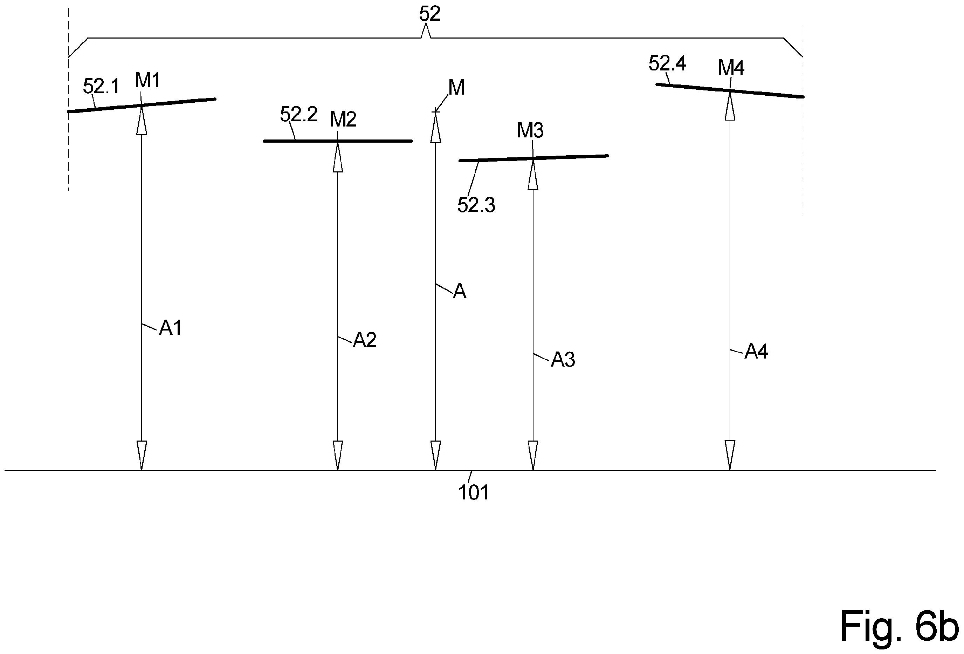

**Figur 6** zeigt ebenfalls in einer Seitenansicht auf einen Scanner mit 4 Sensorflächen 52.1-52.4 die Situation, dass diese winklig zueinander liegen und damit meist auch winklig zur Bezugsebene 101, wobei in diesem Fall zufällig eine Sensorfläche 52.2 mit ihrer Sensor Ebene 52.2" parallel zur Bezugsebene 101 liegt

Im oberen Teil der **Figur 6** ist zu erkennen, dass gemäß einer 1. Methode a) die Winkellage der Gesamt-Sensor-Ebene 52"a ermittelt wird als genau zwischen den beiden extremsten Winkellagen von Sensor-Ebenen, die in diesem Fall die beiden Sensor-Ebenen 52.1" und 52.4" sind, die um den Winkel α4 spitzwinklig zueinander verlaufen, während die beiden anderen Sensor-Ebenen eine Winkellage zwischen diesen beiden extremen Winkellagen besitzen, also zu den beiden anderen Sensor-Ebenen geringere Zwischenwinkel $\alpha 2$, $\alpha 3$ einnehmen.

In der rechten Bildhälfte der **Figur 6a** ist dargestellt, dass zunächst von jeder Sensor-Ebene 52.1" bis 52.4" der jeweilige Zwischenwinkel $\beta 1$ bis $\beta 4$ zur Bezugsebene 101, etwa der Auflagefläche 101, ermittelt wird und die Winkellage der nach dieser Methode b) ermittelten Gesamt-Sensor-Ebene 52"b durch einen Winkel $\beta$ festgelegt wird, der das arithmetische Mittel aus den einzelnen Winkel $\beta 1$ bis $\beta 4$ ist.

Da dies noch nicht die konkrete Lage der Gesamt-Sensor-Ebene 52"b wiedergibt, da deren Abstand von der Bezugsebene 101 ebenfalls definiert sein muss, zeigt **Figur 6b**, dass ein solcher Abstand A als arithmetisches Mittel aus den Abständen A1 bis A4 des jeweiligen Mittelpunktes M1-M4 der jeweiligen Sensorfläche 52.1-52.4 von der Bezugsebene 101 festgelegt wird, um den die Mitte der Gesamt-Sensor-Fläche 52 von der Bezugsebene 101 entfernt angenommen wird.

BEZUGSZEICHENLISTE

| | |
|---|---|
| 1 | Roboter |
| 2 | Oberarm |
| 2' | Oberarm-Achse |
| 3 | Unterarm |
| 3' | Unterarm-Achse |
| 4 | Hub-Einheit |
| 4' | Hub-Achse |
| | |
| 50 | Scanner |
| 50* | Scanner-Auswerteeinheit |
| 50' | Abtast-Linie |
| 50" | Abtast-Ebene |
| 51.1-8 | Kamera |
| 51* | Kamera-Auswerteeinheit |
| 52.1-8 | flächiger optischer Sensor, Sensor-Fläche CCD-Sensor |
| 52.1'-8' | Sensor-Linie |
| 52.1"-8" | Sensor-Ebene |
| 52' | Gesamt-Sensor-Linie |
| 52', '52"a, b | Gesamt-Sensor-Ebene |
| 52.1S-8S | Pixel-Strecke |
| 53.1-8 | Aufnahmebereich |
| 54 | Pixel-Matrix |
| 54A1, 54A2 | Pixel |
| 54B1, 54B2 | Pixel |
| A, B... | Pixel-Zeile |
| .1, .2 | Pixel-Spalte |
| 55.1, 55.2 | Kamera-Modul |
| 55* | Modul-Auswerteeinheit |
| 56 | Abbild-Kanal |
| 56' | Kanal-Richtung |

| | |
|---|---|
| 57 | Kanalbreite |
| | |
| 90 | Ermittlungs-Vorrichtung |
| | |
| 100 | Umsetzvorrichtung, Roboterstraße |
| 100* | Steuerung |
| 101 | Aufnahmefläche, Produktband |
| 102 | Behälter |
| 103 | Ablagefläche |
| 104 | Quertraverse, Roboterbasis |
| 105 | Behälterband |
| | |
| A | Abstand |
| A1, A2 | Abstand |
| H | Sensor-Höhe |
| h | Höhe, Höhenlage |
| K | Konturlinie, Höhen-Konturlinie |
| KK | Kalibrierung-Körper |
| M1, M2 | Mittelpunkt Sensor-Fläche |
| P, PA - PD | Produkt |
| X | Transportrichtung |
| Y | Querrichtung |
| Z | Höhenrichtung, Vertikale |
| z | Abstand, Z-Abstand, von Sensor-Ebene 52" aus |

**Patentansprüche**

1. **Scanner** (50), insbesondere Linien-Scanner, zum berührungslosen Bestimmen der Position, ggfs. Drehlage und Form wenigstens eines sich quer zu einer Abtast-Linie (50') des Scanners (50) in Transportrichtung (X) bewegenden Produktes (P), mit

    - einem Kamerafeld aus mehreren Kameras (51.1, 51.2...) für elektromagnetische Strahlen, mit jeweils einem zweidimensionalen optischen Sensor (52.1, 52.2...), insbesondere einer zweidimensionalen Pixel-Matrix (54), aus lichtempfindlichen Pixeln (54A1, 54A2,.... 54B1, 54B2), insbesondere einem CCD-Sensor oder CMOS-Sensor (52.1, 52.2...),

    - wobei die Aufnahme-Bereiche (53.1, 53.2...) benachbarter Kameras (51.1, 51.2...), sich entlang der Abtast-Linie (50') wenigstens überlappen,

    - einer Scanner-Auswerteeinheit (50*), insbesondere einem Computer, die so ausgebildet ist, dass sie in der Lage ist zum

        - Auswerten der Beleuchtungswerte der Pixel (54A1, 54A2,.... 54B1, 54B2) der Kameras (51.1, 51.2...),

        - Ermitteln eines Höhen-Profils des Produktes (P) entlang der Abtast-Linie (50'),

        - Zusammensetzen der Höhen-Profile in Transportrichtung (X) des Produktes (P) zu einer dreidimensionalen Darstellung der Form des Produktes (P), einschließlich dessen Position und ggfs. Drehlage relativ zum Scanner (50), wobei

- das Kamerafeld mehr als zwei, insbesondere mehr als drei Kameras (51.1, 51.2...), umfasst, deren Sensoren (52.1, 52.2...) in Richtung der Abtast-Linie (50') in Querrichtung (Y) der Transportrichtung (X) hintereinander angeordnet sind, um von vielen, insbesondere markanten, Stellen (B1) des Produkts (P) auf der Abtast-Linie (50') jeweils eine Aufnahme auf je einer Pixel-Strecke (PS), die etwa in Querrichtung (Y) verläuft, anzufertigen;

**dadurch gekennzeichnet, dass**
der Scanner (50) ausgelegt ist, um

- die Position ( K1.130, K2.115) des jeweiligen Stellen-Abbildes innerhalb jeder dieser Pixel-Strecken (PS) zu ermitteln,
- aus den unterschiedlichen Positionen ( .130, .115) der Stellen-Abbilder der Abstand der Stelle (B1) von den Pixel-Strecken (PS), also den jeweiligen Sensor-Ebenen (52.1", 52.2"...) und damit seine Höhenlage über der Auflagefläche (101) zu errechnen,
- die Stellen-Abbilder einschließlich ihrer Positionen (K1.130, K2.115) innerhalb der Pixel-Strecke (PS), insbesondere die gesamten Pixel-Strecken (PS), virtuell parallel nebeneinander, insbesondere untereinander, anzuordnen,
- einen möglichst schmalen, virtuellen Abbild-Kanal (56) quer über alle Pixel-Strecken (PS) so zu legen, dass die, vorzugsweise alle, Stellen-Abbilder darin liegen, insbesondere vollständig darin liegen,
- den Winkel zwischen der Verlaufsrichtung (56') des Abbild-Kanals (56) und der Verlaufsrichtung der Pixel-Strecken (PS) zu ermitteln,
- aus dem Winkel auf den Abstand (A) von der Gesamt-Sensor-Ebene (52") zu schließen, und
- aus der bekannten Höhe (H) der Gesamt-Sensor-Ebene (52") über der Auflagefläche (101) die Höhenlage (h) zu errechnen.

2. Scanner nach Anspruch 1,
**dadurch gekennzeichnet, dass**
die 2-dimensionalen, optischen, Sensoren (52.1, 52.2...) von einer Bezugsebene (101), die insbesondere eine sich vorzugsweise bewegende Auflagefläche (101) für das Produkt (P) ist,

- alle etwa gleich weit beanstandet sind und/oder
- in Richtung der Abtast-Linie (50') hintereinander angeordnet sind.

3. Scanner nach einem der vorhergehenden Ansprüche,
**dadurch gekennzeichnet, dass**
die 2-dimensionalen, optischen, Sensoren (52.1, 52.2...)

- mit ihren Sensor-Ebenen (52.1", 52.2"...) etwa parallel zueinander angeordnet sind,
- vorzugsweise alle Sensor-Ebenen (52.1", 52.2"...) etwa parallel zueinander angeordnet sind,
und/oder
- die mit ihrer Sensor-Ebene (52.1", 52.2"...) etwa in der gleichen Ebene angeordnet sind,
- vorzugsweise alle Sensor-Ebenen (52.1", 52.2"...).

4. Scanner nach einem der vorhergehenden Ansprüche,
**dadurch gekennzeichnet, dass**

- die Aufnahme-Bereiche (53.1, 53.2...) der Kameras (51.1, 51.2...) jeweils die gesamte Länge der Abtast-Linie (50') beinhalten.

5. Scanner nach einem der vorhergehenden Ansprüche,
**dadurch gekennzeichnet, dass**

- mehrere Kameras (51.1, 51.2...) in Richtung der Abtast-Linie (50') unmittelbar hintereinander mit jeweils einem 2-dimensionalen, insbesondere optischen, Sensor (52.1, 52.2...) in fixer räumlicher Anordnung zueinander in einer gemeinsam handhabbaren Baueinheit als Kamera-Modul (55.1, 55.2) befestigt sind,
- insbesondere jedes Kamera-Modul (55.1, 55.2) eine, insbesondere nur eine, Modul-Auswerteeinheit (55*) zum Auswerten der Signale aller Sensoren (52.1, 52.2...) des Kamera-Moduls (55.1, 55.2) umfasst.

6. Scanner nach einem der vorhergehenden Ansprüche,
**dadurch gekennzeichnet, dass**

- mehrere Kamera-Module (55.1, 55.2) in Richtung der Abtast-Linie (50') hintereinander zu dem Scanner (50) zusammengefasst sind,
- insbesondere eine Scanner-Auswerteeinheit (50*) zum Auswerten der Signale aller Sensoren (52.1, 52.2...) aller Kamera-Module (55.1, 55.2) umfasst,
- die insbesondere die Auswerte-Ergebnisse der Modul-Auswerteeinheiten (55*) als Eingangsgrößen erhält.

7. Scanner nach einem der vorhergehenden Ansprüche,
**dadurch gekennzeichnet, dass**
die Kameras (55.1, 55.2) von einer Bezugsebene (101), die insbesondere eine sich bewegende Auflagefläche (101) für die Produkte (P) ist,

- alle etwa gleich weit beabstandet sind, und/oder
- mit ihrer Sensor-Ebene (52.1", 52.2"...) etwa parallel zur Bezugsebene (101), insbesondere der Auflagefläche (101), angeordnet sind,
- vorzugsweise alle Sensor-Ebenen (52.1", 52.2"...),
und/oder
- die mit ihrer Sensor-Ebene (52.1", 52.2"...) etwa in der gleichen Ebene angeordnet sind,
- vorzugsweise alle Sensor-Ebenen (52.1", 52.2"...) etwa in der gleichen Ebene angeordnet sind.

8. **Ermittlungs-Vorrichtung** (90) zum Bestimmen der Position, ggfs. Drehlage und Form eines sich bewegenden Produktes (P), mit

- einer sich in Transportrichtung (X) bewegenden Auflagefläche (101), insbesondere einem Förderband (101), auf dem das Produkt (P), bei mehreren Produkten (P) diese insbesondere unregelmäßig verteilt, liegt,
- einem Scanner (50) mit einer sich in Querrichtung (Y) zur Transportrichtung (X) über die, vorzugsweise gesamte, Breite der Auflagefläche (101) erstreckenden Abtast-Linie (50')

**dadurch gekennzeichnet, dass**
der Scanner (50) nach einem der vorhergehenden Ansprüche ausgebildet ist.

9. Ermittlungs-Vorrichtung (90) nach Anspruch 8,
**dadurch gekennzeichnet, dass**

- eine Lichtquelle vorhanden ist, die die Szene mit dem Produkt diffus beleuchtet,
- insbesondere die Lichtquelle Bestandteil des Scanners (50) ist
oder
- die Lichtquelle in der Lage ist, ein regelmäßiges oder unregelmäßiges Muster, insbesondere ein regelmäßiges geometrisches Muster, auf die Szene aufzustrahlen.

10. Ermittlungs-Vorrichtung (90) nach Anspruch 8 und 9,
**dadurch gekennzeichnet, dass**

- ein Kalibrier-Objekt vorhanden ist, welches insbesondere in einer definierten Position zur Bezugsebene (101), insbesondere auf der Auflagefläche (101) angeordnet werden kann,

- auf der Außenfläche des Kalibrier-Objekts, insbesondere dessen Oberseite, vorzugsweise ein definiertes Muster, insbesondere ein regelmäßiges geometrisches Muster, aufgebracht ist.

11. **Verfahren** zum berührungslosen Bestimmen der Position, ggfs. Drehlage und Form eines Produktes (P, A, B, C, D) auf einer sich bewegenden Auflagefläche (101), insbesondere einem Förderband (101),

mittels eines Scanners (50) oder einer Ermittlungs-Vorrichtung (90) nach einem der vorhergehenden Ansprüche,
indem

- entlang einer in Querrichtung (Y) zur Transportrichtung (X) über die, vorzugsweise gesamte, Breite der Auflagefläche (101) verlaufenden Abtast-Linie (50') das 2-dimensionale Höhenprofil des auf der Auflagefläche (101) befindlichen Produktes (P, A, B, C, D), insbesondere durch einen einzelnen Scan (S1, S2...), ermittelt wird,
- die zeitversetzt durch jeweils einen Scan (S1, S2...) ermittelten Höhenprofile in Transportrichtung (X) zu einem 3-dimensionalen Höhenprofil, damit in der Regel der Form des Produktes (P, A, B, C, D), einschließlich dessen Position und gegebenenfalls Drehlage auf der sich bewegenden Auflagefläche (101), zusammengesetzt werden,

wobei

- von vielen, insbesondere markanten, Stellen ( B1) des Produkts (P) auf der Abtast-Linie (50') jeweils eine Aufnahme auf je einer Pixel-Strecke (PS), die etwa in Querrichtung (Y) verläuft, von mindestens zwei optischen flächigen Kameras (52.1, 52.2...), die in Richtung der Abtast-Linie (50') hintereinander angeordnet sind, angefertigt wird,
- die Position ( K1.130, K2.115) des jeweiligen Stellen-Abbildes innerhalb jeder dieser Pixel-Strecken (PS) ermittelt wird,
- aus den unterschiedlichen Positionen ( .130, .115) der Stellen-Abbilder der Abstand der Stelle (B1) von den Pixel-Strecken (PS), also den jeweiligen Sensor-Ebenen (52.1", 52.2"...) und damit seine Höhenlage über der Auflagefläche (101) errechnet wird,

**dadurch gekennzeichnet, dass**

- die Stellen-Abbilder einschließlich ihrer Positionen ( K1.130, K2.115) innerhalb der Pixel-Strecke (PS), insbesondere die gesamten Pixel-Strecken (PS), virtuell parallel nebeneinander, insbesondere untereinander, angeordnet werden,
- ein möglichst schmaler, virtueller Abbild-Kanal (56) quer über alle Pixel-Strecken (PS) so gelegt wird, dass die, vorzugsweise alle, Stellen-Abbilder darin liegen, insbesondere vollständig darin liegen,
- der Winkel zwischen der Verlaufsrichtung (56') des Abbild-Kanals (56) und der Verlaufsrichtung der Pixel-Strecken (PS) ermittelt wird,
- aus dem Winkel auf den Abstand (A) von der Gesamt-Sensor-Ebene (52") geschlossen wird,
- aus der bekannten Höhe (H) der Gesamt-Sensor-Ebene (52") über der Auflagefläche (101) die Höhenlage (h) errechnet wird.

12. Verfahren nach einem der vorhergehenden Verfahrensansprüche,
**dadurch gekennzeichnet, dass**

- als Pixel-Strecke (PS) innerhalb jedes flächigen optischen Sensors (52.1-52.8) diejenige Abfolge von Pixeln festgelegt wird, die in Richtung der Abtast-Linie (50') verläuft, insbesondere auf der Schnittlinie der jeweiligen Sensor-Ebene mit der Abtast-Ebene (50") liegt, und/oder
- die absoluten Y-Positionen entlang der Abtast-Linie (50') mittels Vermessung eines In definierter Position auf der Aufnahmefläche (101), insbesondere dem Produktband (101), angeordneten Kalibrier-Objektes bei einem Kalibrier-Lauf festgelegt werden.

13. Verfahren nach einem der vorhergehenden Verfahrensansprüche,
**dadurch gekennzeichnet, dass**

- aus der Kanal-Breite (57) auf die Genauigkeit der Messung geschlossen wird, indem eine geringere Kanal-Breite (57) eine höhere Genauigkeit bedeutet als eine größere Kanal-Breite (57) und/oder
- ein Ausreißer von Stellen-Abbildern bezüglich der Verlaufsrichtung (56') des Kanals (56) bei der virtuellen Festlegung der Lage und Breite des Kanals (56) weggelassen oder untergewichtet oder rechnerisch in Richtung Kanal-Mitte verlagert wird.

14. Verfahren nach einem der vorhergehenden Verfahrensansprüche,
**dadurch gekennzeichnet, dass**

mangelnde Parallelität der jeweiligen Sensor-Ebenen (52.1" bis 52.8") rechnerisch ausgeglichen werden, indem

- der Mittelwert zwischen den beiden extremsten Winkellagen der Sensor-Ebenen (52.1" bis 52.8") als Gesamt-Sensor-Ebenen-Winkellage gewählt
oder
- aus der Summe der Abweichungswinkel von einer beliebig definierten Nulllage, etwa der Lage der Bezugsebene (101), dividiert durch die Anzahl der Sensor-Ebenen (52.1" bis 52.8") die Winkellage der Gesamt-Sensor-Ebene (52") zu der Nulllage ermittelt wird.

15. Verfahren nach einem der vorhergehenden Verfahrensansprüche,
**dadurch gekennzeichnet, dass**
die Position und Richtung der Abtast-Linie (50') sowie deren Zuordnung zu einer bestimmten Reihe von Detektor-Elementen auf der Detektor-Fläche, insbesondere Pixel-Reihe, also den Pixel-Strecken auf jeder einzelnen z.B. Pixel-Matrix jeder Kamera festgelegt wird, mittels eines Kalibrier-Laufes, bei dem insbesondere ein Kalibrier-Körper benutzt wird, der definiert dimensioniert und insbesondere mit einem definierten Muster versehen und in einer definierten Lage auf der AblageFläche angeordnet ist.

**Claims**

1. **Scanner** (50), in particular line scanner, for contactlessly determining the position, optionally rotational orientation and shape of at least one product (P) that is moving in a transport direction (X) transversely with respect to a scanning line (50') of the scanner (50), the scanner comprising

- a camera array consisting of multiple cameras (51.1, 51.2...) for electromagnetic radiation, each camera having a two-dimensional optical sensor (52.1, 52.2...), in particular a two-dimensional pixel matrix (54), consisting of light-sensitive pixels (54A1, 54A2, .... 54B1, 54B2), in particular a CCD sensor or CMOS sensor (52.1, 52.2...),
- wherein the capture areas (53.1, 53.2...) of adjacent cameras (51.1, 51.2...) at least overlap along the scanning line (50'),
- a scanner evaluation unit (50*), in particular a computer, which is designed to be capable of

- evaluating the illumination values of the pixels (54A1, 54A2,.... 54B1, 54B2) of the cameras (51.1, 51.2...),
- ascertaining a height profile of the product (P) along the scanning line (50'),

- combining the height profiles in the transport direction (X) of the product (P) to form a three-dimensional representation of the shape of the product (P), including its position and optionally rotational orientation relative to the scanner (50), wherein

- the camera array comprises more than two, in particular more than three cameras (51.1, 51.2...), the sensors (52.1, 52.2...) of which are arranged in series in the direction of the scanning line (50') in a transverse direction (Y) with respect to the transport direction (X) in order, on the scanning line (50'), to capture one image each of numerous, in particular prominent, points (B1) on the product (P) on in each case one pixel section (PS), which extends approximately in the transverse direction (Y);

**characterised in that**
the scanner (50) is designed

- to ascertain the position (K1.130, K2.115) of the particular point image within each of said pixel sections (PS),
- to calculate, from the different positions (.130, .115) of the point images, the distance of the point (B1) from the pixel sections (PS), that is to say the respective sensor planes (52.1", 52.2"...), and thus the height position of said point above the supporting surface (101),
- to virtually arrange the point images including their positions (K1.130, K2.115) within the pixel section (PS), in particular the entirety of the pixel sections (PS), parallel and adjacent to one another, in particular one below the other,
- to lay as narrow as possible a virtual image channel (56) across all pixel sections (PS) such that the, preferably all, point images lie in said virtual image channel, in particular lie entirely in said virtual image channel,
- to ascertain the angle between the direction of extent (56') of the image channel (56) and the direction of extent of the pixel sections (PS),
- to infer from the angle the distance (A) from the whole-sensor plane (52"), and
- to calculate the height position (h) from the known height (H) of the whole-sensor plane (52") above the supporting surface (101).

2. Scanner according to claim 1,
**characterised in that**
the 2-dimensional, optical, sensors (52.1, 52.2...) are

- all at an approximately equal distance from a reference plane (101) which is in particular a preferably moving supporting surface (101) for the product (P),
and/or
- are arranged in series in the direction of the scanning line (50').

3. Scanner according to either of the preceding claims,
**characterised in that**
the 2-dimensional, optical, sensors (52.1, 52.2...)

- are arranged with their sensor planes (52.1", 52.2"...) approximately parallel to one another,
- preferably all sensor planes (52.1", 52.2"...) are arranged approximately parallel to one another, and/or
- which are arranged with their sensor planes (52.1", 52.2"...) approximately in the same plane,
- preferably all sensor planes (52.1", 52.2"...).

4. Scanner according to any of the preceding claims,
**characterised in that**

- the capture areas (53.1, 53.2...) of the cameras (51.1, 51.2...) each cover the entire length of the scanning line (50').

5. Scanner according to any of the preceding claims,
**characterised in that**

- multiple cameras (51.1, 51.2...) are fastened, directly in series in the direction of the scanning line (50') and each with a 2-dimensional, in particular optical, sensor (52.1, 52.2...), in a fixed spatial arrangement with respect one another in a jointly handleable structural unit as a camera module (55.1, 55.2),
- in particular, each camera module (55.1, 55.2) comprises a, in particular only one, module evaluation unit (55*) for evaluating the signals of all sensors (52.1, 52.2...) of the camera module (55.1, 55.2).

6. Scanner according to any of the preceding claims,
**characterised in that**

- multiple camera modules (55.1, 55.2) are combined, in series in the direction of the scanning line (50'), to form the scanner (50),
- in particular comprises a scanner evaluation unit (50*) for evaluating the signals of all sensors (52.1, 52.2...) of all camera modules (55.1, 55.2),
- which scanner evaluation unit in particular receives the evaluation results from the module evaluation unit (55*) as input variables.

7. Scanner according to any of the preceding claims,
**characterised in that**

the cameras (55.1, 55.2) are

- all at an approximately equal distance from a reference plane (101) which is in particular a moving supporting surface (101) for the products (P),
and/or
- are arranged with their sensor plane (52.1", 52.2"...) approximately parallel to the reference plane (101), in particular the supporting surface (101),
- preferably all sensor planes (52.1", 52.2"...), and/or
- which are arranged with their sensor plane (52.1", 52.2"...) approximately in the same plane,
- preferably all sensor planes (52.1", 52.2"...) are arranged approximately in the same plane.

8. **Ascertainment device** (90) for determining the position, optionally rotational orientation and shape of a moving product (P), the ascertainment device having

- a supporting surface (101) which moves in a transport direction (X), in particular a conveyor belt (101), on which the product (P) lies, in particular in irregularly distributed form in the case of multiple products (P),
- a scanner (50) having a scanning line (50') which extends in a transverse direction (Y) with respect to the transport direction (X) over the width, preferably the entire width, of the supporting surface (101),

**characterised in that**
the scanner (50) is designed according to any of the preceding claims.

9. Ascertainment device (90) according to claim 8, **characterised in that**

- a light source is provided which diffusely illuminates the scene with the product,
- in particular, the light source is part of the scanner (50),
or
- the light source is capable of radiating a regular or irregular pattern, in particular a regular geometrical pattern, onto the scene.

10. Ascertainment device (90) according to claim 8 and 9, **characterised in that**

- a calibration object is provided which can be arranged in particular in a defined position relative to the reference plane (101), in particular on the supporting surface (101),
- a defined pattern, in particular a regular geometrical pattern, is preferably applied to the outer surface of the calibration object, in particular to the top side thereof.

11. **Method** for contactlessly determining the position, optionally rotational orientation and shape of a product (P, A, B, C, D) on a moving supporting surface (101), in particular a conveyor belt (101),

by means of a scanner (50) or an ascertainment device (90) according to any of the preceding claims,
in that,

- along a scanning line (50') which extends in a transverse direction (Y) with respect to the transport direction (X) over the width, preferably the entire width, of the supporting surface (101), the 2-dimensional height profile of the product (P, A, B, C, D) situated on the supporting surface (101) is ascertained, in particular by way of a single scan (S1, S2...),
- the height profiles ascertained at different times by way of one scan (S1, S2...) each are combined in the transport direction (X) to form a three-dimensional height profile and thus generally the shape of the product (P, A, B, C, D), including the position and optionally rotational orientation thereof on the moving supporting surface (101),

wherein,

- on the scanning line (50'), one image each of numerous, in particular prominent, points (B1) on the product (P) is captured on in each case one pixel section (PS), which extends approximately in the transverse direction (Y), of at least two optical planar cameras (52.1, 52.2...) which are arranged in series in the direction of the scanning line (50'),
- the position (K1.130, K2.115) of the particular point image within each of said pixel sections (PS) is ascertained,
- from the different positions (.130, .115) of the point images, the distance of the point (B1) from the pixel sections (PS), that is to say the respective sensor planes (52.1", 52.2"...), and thus the height position of said point above the supporting surface (101), is calculated,

**characterised in that**

- the point images including their positions (K1.130, K2.115) within the pixel section (PS), in particular the entirety of the pixel sections (PS), are virtually arranged parallel and adjacent to one another, in particular one below the other,

- as narrow as possible a virtual image channel (56) is laid across all pixel sections (PS) such that the, preferably all, point images lie in said virtual image channel, in particular lie entirely in said virtual image channel,

- the angle between the direction of extent (56') of the image channel (56) and the direction of extent of the pixel sections (PS) is ascertained,

- the distance (A) from the whole-sensor plane (52") is inferred from the angle,

- the height position (h) is calculated from the known height (H) of the whole-sensor plane (52") above the supporting surface (101).

12. Method according to any of the preceding method claims,
**characterised in that**,

- within each planar optical sensor (52.1-52.8), a pixel section (PS) is defined as that sequence of pixels which extends in the direction of the scanning line (50'), in particular on the line of intersection of the particular sensor plane with the scanning plane (50"),
and/or

- the absolute Y positions along the scanning line (50') are established, in a calibration pass, by measurement of a calibration object which is arranged in a defined position on the receiving surface (101), in particular the product belt (101).

13. Method according to any of the preceding method claims,
**characterised in that**

- the accuracy of the measurement is inferred from the channel width (57), **in that** a relatively small channel width (57) signifies greater accuracy than a relatively large channel width (57), and/or

- an outlier of point images in relation to the direction of extent (56') of the channel (56) is omitted from, or underweighted in, or mathematically shifted in the direction of the channel centre in, the virtual establishment of the orientation and width of the channel (56).

14. Method according to any of the preceding method claims,

**characterised in that**
a lack of parallelism of the respective sensor planes (52.1" to 52.8") is mathematically compensated **in that**

- the average value between the two most extreme angular orientations of the sensor planes (52.1" to 52.8") are selected as a whole-sensor plane angular orientation,
or,

- from the sum of the angles of deviation from an arbitrarily defined zero orientation, for example the orientation of the reference plane (101), divided by the number of sensor planes (52.1" to 52.8"), the angular orientation of the whole-sensor plane (52") relative to the zero orientation is ascertained.

15. Method according to any of the preceding method claims,
**characterised in that**
the position and direction of the scanning line (50') and the assignment thereof to a particular row of detector elements on the detector surface, in particular pixel row, that is to say the pixel sections on each individual pixel matrix, for example, of each camera, is established by means of a calibration pass in which, in particular, use is made of a calibration body which is of defined dimensions and is in particular provided with a defined pattern and is arranged in a defined orientation on the depositing surface.

**Revendications**

1. **Scanner** (50), en particulier scanner à balayage linéaire, pour déterminer sans contact la position, le cas échéant la position de rotation et la forme d'au moins un produit (P) se déplaçant transversalement à une ligne de balayage (50') du scanner (50) dans la direction de transport (X), avec

- un champ de caméras constitué de plusieurs caméras (51.1, 51.2...) pour des rayons électromagnétiques, avec respectivement un capteur optique bidimensionnel (52.1, 52.2...), en particulier une matrice de pixels bidimensionnelle (54), constituée de pixels sensibles à la lumière (54A1, 54A2, ....54B1, 54B2), en particulier un capteur CCD ou un capteur CMOS (52.1, 52.2...),

- dans lequel les zones de prise de vue (53.1, 53.2...) de caméras voisines (51.1, 51.2...) se chevauchent au moins le long de la ligne de balayage (50'),

- une unité d'évaluation de scanner (50*), en particulier un ordinateur, qui est conçue de telle sorte qu'elle soit en mesure de

- évaluer les valeurs d'éclairage des pixels (54A1, 54A2,....54B1, 54B2) des caméras (51.1, 51.2...),
- déterminer un profil de hauteur du produit (P) le long de la ligne de balayage (50'),
- assembler les profils de hauteur dans la direction de transport (X) du produit (P) pour obtenir une représentation tridimensionnelle de la forme du produit (P), y compris sa position et, le cas échéant, sa position de rotation par rapport au scanner (50), dans lequel

- le champ de caméra comprend plus de deux, en particulier plus de trois caméras (51.1, 51.2...), dont les capteurs (52.1, 52.2...) sont disposés les uns derrière les autres dans la direction de la ligne de balayage (50') dans la direction transversale (Y) à la direction de transport (X), afin de réaliser une prise de vue de nombreux endroits, en particulier marquants (B1), du produit (P) sur la ligne de balayage (50'), chaque fois sur une ligne de pixels (PS) qui s'étend approximativement dans la direction transversale (Y) ;

**caractérisée en ce que**
le scanner (50) est adapté pour

- déterminer la position (K1.130, K2.115) de l'image de position respective à l'intérieur de chacune de ces lignes de pixels (PS),
- calculer, à partir des différentes positions (130, .115) des images de position, la distance de la position (B1) par rapport aux lignes de pixels (PS), c'est-à-dire aux plans de capteurs respectifs (52.1", 52.2"...) et donc sa position en hauteur au-dessus de la surface d'appui (101),
- de disposer virtuellement les images de position, y compris leurs positions (K1.130, K2.115), à l'intérieur de la ligne de pixels (PS), en particulier l'ensemble des lignes de pixels (PS), parallèlement les uns aux autres, en particulier les uns en dessous des autres,
- de placer un canal d'image virtuel (56) le plus étroit possible en travers de toutes les lignes de pixels (PS) de manière à ce que les images de position, de préférence toutes, s'y trouvent, en particulier s'y trouvent entièrement,
- déterminer l'angle entre la direction d'extension (56') du canal d'image (56) et la direction des lignes de pixels (PS),
- de déduire de l'angle la distance (A) par rapport au plan général de capteur (52"), et
- de calculer les hauteurs (h) à partir de la hauteur connue (H) du plan général de capteur (52") au-dessus de la surface d'appui (101).

2. Scanner selon la revendication 1,
**caractérisée en ce que**
les capteurs optiques bidimensionnels (52.1, 52.2, ...), dans un plan de référence (101), qui est notamment une surface d'appui (101), de préférence mobile, pour le produit (P),

- sont tous à peu près à la même distance et/ou
- sont disposés les uns derrière les autres dans la direction de la ligne de balayage (50').

3. Scanner selon l'une des revendications précédentes,
**caractérisée en ce que**
les capteurs optiques bidimensionnels (52.1, 52.2...)

- avec leurs plans de capteur (52.1", 52.2"...) sont disposés à peu près parallèlement les uns aux autres,
- de préférence tous les plans de capteurs (52.1", 52.2"...) sont disposés à peu près parallèlement les uns aux autres, et/ou
- qui avec leur plan de capteur (52.1", 52.2"...) sont disposés à peu près dans le même plan,
- de préférence tous les plans de capteurs (52.1", 52.2"...).

4. Scanner selon l'une des revendications précédentes,
**caractérisée en ce que**

- les zones de prise de vue (53.1, 53.2...) des caméras (51.1, 51.2...) comprennent chacune la longueur totale de la ligne de balayage (50').

5. Scanner selon l'une des revendications précédentes,
**caractérisée en ce que**

- plusieurs caméras (51.1, 51.2...) sont fixées directement les unes derrière les autres dans la direction de la ligne de balayage (50'), chacune avec un capteur bidimensionnel, notamment optique (52.1, 52.2...), dans une disposition spatiale fixe les unes par rapport aux autres, dans une unité de construction manipulable en commun en tant que module de caméra (55.1, 55.2),
- en particulier chaque module de caméra (55.1, 55.2) comprend une, en particulier une seule, unité d'évaluation de module (55*) pour évaluer les signaux de tous les capteurs (52.1, 52.2...) du module de caméra (55.1, 55.2).

6. Scanner selon l'une des revendications précédentes,
**caractérisée en ce que**

- plusieurs modules de caméra (55.1, 55.2) sont regroupés les uns derrière les autres dans le sens de la ligne de balayage (50') pour former le scanner (50),
- comprend en particulier une unité d'évaluation de scanner (50*) pour évaluer les signaux de tous les capteurs (52.1, 52.2...) de tous les modules de caméra (55.1, 55.2),
- qui reçoit en particulier les résultats d'évaluation des unités d'évaluation de module (55*) comme paramètres d'entrée.

7. Scanner selon l'une des revendications précédentes,
**caractérisée en ce que**
les caméras (55.1, 55.2) sont éloignées d'un plan de référence (101), qui est notamment une surface d'appui (101) mobile pour les produits (P),

- sont à peu près à la même distance,
et/ou
- sont disposés avec leur plan de capteur (52.1", 52.2"...) à peu près parallèlement au plan de référence (101), en particulier à la surface d'appui (101),
- de préférence tous les plans de capteurs (52.1", 52.2"...),
et/ou
- qui sont disposés avec leur plan de capteur (52.1", 52.2"...) à peu près dans le même plan,
- de préférence tous les plans de capteur (52.1", 52.2"...) sont disposés à peu près dans le même plan.

8. **Dispositif de détermination** (90) pour déterminer la position, le cas échéant la position de rotation et la forme d'un produit (P) mobile, avec

- une surface d'appui (101) se déplaçant dans la direction de transport (X), en particulier une bande transporteuse (101), sur laquelle repose le produit (P), en particulier réparti de manière irrégulière dans le cas de plusieurs produits (P),
- un scanner (50) avec une ligne de balayage (50') s'étendant dans la direction transversale (Y) à la direction de transport (X) sur la largeur, de préférence totale, de la surface d'appui (101),

**caractérisée en ce que**
le scanner (50) est réalisé selon l'une des revendications précédentes.

9. Dispositif de détection (90) selon la revendication 8,
**caractérisée en ce que**

- une source lumineuse est présente pour éclairer la scène avec le produit de manière diffuse,
- en particulier la source lumineuse fait partie du scanner (50)
ou
- la source lumineuse est capable de projeter sur la scène un motif régulier ou irrégulier, en particulier un motif géométrique régulier.

10. Dispositif de détection (90) selon les revendications 8 et 9,
**caractérisée en ce que**

- il existe un objet de calibrage qui peut être disposé en particulier dans une position définie par rapport au plan de référence (101), en particulier sur la surface d'appui (101),
- un motif défini, notamment un motif géométrique régulier, est de préférence appliqué sur la surface extérieure de l'objet de calibrage, notamment sur sa face supérieure.

11. **Procédé** de détermination sans contact de la position, le cas échéant de la position de rotation et de la forme d'un produit (P, A, B, C, D) sur une surface d'appui (101) mobile, notamment une bande transporteuse (101),

au moyen d'un scanner (50) ou d'un dispositif de détermination (90) selon l'une des revendications précédentes,
en ce que

- le long d'une ligne de balayage (50') s'étendant dans la direction transversale (Y) à la direction de transport (X) sur la largeur, de préférence totale, de la surface d'appui (101), le profil de hauteur bidimensionnel du produit (P, A, B, C, D) se trouvant sur la surface d'appui (101) est déterminé, notamment par un seul balayage (S1, S2...),
- les profils de hauteur déterminés de manière décalée dans le temps par un balayage respectif (S1, S2...) sont assemblés dans la direction de transport (X) en un profil de hauteur tridimensionnel, donc en règle générale la forme du produit (P, A, B, C, D), y compris sa position et le cas échéant sa position de rotation sur la surface d'appui (101) mobile,

dans lequel

- de nombreux endroits (B1), en particulier marquants, du produit (P) sur la ligne de balayage (50'), on réalise à chaque fois une prise de vue sur une ligne de pixels (PS), qui s'étend à peu près dans la direction transversale (Y), d'au moins deux caméras optiques planes (52.1, 52.2...) qui sont disposées l'une derrière l'autre dans la direction de la ligne de balayage (50'),
- la position (K1.130, K2.115) de l'image de position respective est déterminée à l'intérieur de chacune de ces lignes de pixels (PS),
- à partir des différentes positions (.130, .115) des images de position, on calcule la distance de la position (B1) par rapport aux lignes de pixels (PS), c'est-à-dire aux plans de capteurs respectifs (52.1", 52.2"...) et donc sa position en hauteur au-dessus de la surface d'appui (101),

**caractérisée en ce que**

- les images de position, y compris leurs positions (K1.130, K2.115) à l'intérieur de la ligne de pixels (PS), en particulier toutes les lignes de pixels (PS), sont disposées virtuellement parallèlement les unes à côté des autres, en particulier les unes en dessous des autres,
- un canal d'image virtuel (56) le plus étroit possible est placé en travers de toutes les lignes de pixels (PS) de manière à ce que les images de position, de préférence toutes, s'y trouvent, en particulier s'y trouvent entièrement,
- l'angle entre la direction (56') du canal d'image (56) et la direction des lignes de pixels (PS) est déterminé,
- on déduit de l'angle la distance (A) par rapport au plan général de capteur (52"),
- la position en hauteur (h) est calculée à partir de la hauteur connue (H) du plan général de capteur (52") au-dessus de la surface d'appui (101).

**12.** Procédé selon l'une des revendications de procédé précédentes,
**caractérisée en ce que**

- on définit comme distance de pixels (PS) à l'intérieur de chaque capteur optique plan (52.1-52.8) la succession de pixels qui s'étend dans la direction de la ligne de balayage (50'), en particulier qui se trouve sur la ligne d'intersection du plan de capteur respectif avec le plan de balayage (50"),
et/ou
- les positions Y absolues le long de la ligne de balayage (50') sont déterminées au moyen de la mesure d'un objet de calibrage disposé dans une position définie sur la surface de réception (101), en particulier sur la bande de produit (101), lors d'une course de calibrage.

**13.** Procédé selon l'une des revendications de procédé précédentes,
**caractérisée en ce que**

- la précision de la mesure est déduite de la largeur de canal (57), **en ce qu'**une largeur de canal (57) plus faible signifie une plus grande précision qu'une largeur de canal (57) plus grande et/ou
- lors de la détermination virtuelle de la position et de la largeur du canal (56), on omet ou on sous-pondère une valeur aberrante d'images de positions par rapport à la direction d'extension (56') du canal (56) ou on la déplace par calcul en direction du milieu du canal.

**14.** Procédé selon l'une des revendications de procédé précédentes,
**caractérisée en ce que**

- le manque de parallélisme des plans respectifs des capteurs (52.1" à 52.8") est compensé par le calcul, **en ce que**
- on chosisit la valeur moyenne entre les deux positions angulaires les plus extrêmes des plans des capteurs (52.1" à 52.8") comme position angulaire totale des plans des capteurs
ou
- à partir de la somme des angles d'écart par rapport à une position zéro définie de manière quelconque, par exemple la position du plan de référence (101), divisée par le nombre de plans de capteur (52.1" à 52.8"), on détermine la position angulaire du plan général de capteur (52") par rapport à la position zéro.

**15.** Procédé selon l'une des revendications de procédé précédentes,
**caractérisée en ce que**
la position et la direction de la ligne de balayage (50') ainsi que son affectation à une série déterminée d'éléments de détection sur la surface de détection, en particulier la série de pixels, c'est-à-dire les lignes de pixels sur chaque matrice individuelle, par exemple de pixels, de chaque caméra, sont déterminées au moyen d'une course de calibrage, dans laquelle on utilise en particulier un corps de calibrage qui est dimensionné de manière définie et en particulier pourvu d'un modèle défini et qui est disposé dans une position définie sur la surface d'appui.

Fig. 1a

Fig. 1b

# Fig. 2a

# Fig. 2b

Fig. 3a

Fig. 3b

Fig. 3c

K1  K2  K3  K4  K5  K6  K7  K8

50´

55.1  55.2  50

Y
X

Fig. 4a

A
B
C
D
E
F
G
H
I
J
K
L
M
N
O
P

52.1S

50´, 50´´

52.1 = K1

Fig. 4b

EP 4 053 498 B1

Fig. 5

EP 4 053 498 B1

Fig. 6a

EP 4 053 498 B1

Fig. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202012013418 U1
- US 2017359565 A1
- DE 102013111761 A1